(19) Europäisches Patentamt
European Patent Office
Office européen des brevets

(11) **EP 4 586 005 A1**

(12) **EUROPEAN PATENT APPLICATION**

(43) Date of publication:
**16.07.2025 Bulletin 2025/29**

(21) Application number: **24151008.0**

(22) Date of filing: **09.01.2024**

(51) International Patent Classification (IPC):
**G02F 1/35** *(2006.01)*    **G02F 1/365** *(2006.01)*

(52) Cooperative Patent Classification (CPC):
**G02F 1/3528; G02F 1/365;** G02F 1/3532;
G02F 2201/02; G02F 2202/32

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NKT Photonics A/S**
**3460 Birkerød (DK)**

(72) Inventors:
• **CHRISTENSEN, Erik Nicolai**
 **3460 Birkerød (DK)**
• **DEMENIKOV, Mads Høj**
 **3460 Birkerød (DK)**

(74) Representative: **Zacco Denmark A/S**
 **Arne Jacobsens Allé 15**
 **2300 Copenhagen S (DK)**

(54) **SUPERCONTINUUM GENERATION FROM AN ALL-NORMAL DISPERSION FIBER**

(57) Disclosed is all-normal-dispersion (ANDi) based supercontinuum (SC) system, comprising a pulsed light-source-device configured to generate a first train of light-pulses, wherein each of the light pulses is defined in a first frequencydomain, and wherein each of the light-pulses of the first train of light-pulses is defined by a first center-wavelength, wherein the first center-wavelength is below 550 nm.

Fig. 2

EP 4 586 005 A1

## Description

## Field of the invention

The present disclosure relates generally to supercontinuum generation in an all-normal dispersion fiber. More specifically, the present disclosure relates to using an all-normal dispersion fiber to generate supercontinuum that may extend into the ultraviolet domain.

## Background

Generation of a supercontinuum (SC) from an all-normal dispersion (ANDi)-fiber is well-known. For example, a supercontinuum that spans from around 750 nm to around 1300 nm, using a pulsed femtosecond (fs)-source, and an ANDi-fiber has been demonstrated in the article "All-Fiber-Based All-Normal Dispersion Supercontinuum Source Using a Femtosecond Fiber Laser with Hollow-Core Fiber Pulse Compression", in Advanced Photonics 2018 (BGPP, IPR, NP, NOMA, Sensors, Networks, SPPCom, SOF), OSA Technical Digest (online) (Optica Publishing Group, 2018), by I. B. Gonzalo et al.

Furthermore, a survey of supercontinuum bandwidths in various specialty optical fibers from the ultraviolet to the mid-infrared ranges is shown in the article "Recent Advances in Supercontinuum Generation in Specialty Fiber", in JOSA B 38.12 (2021): F90-F103 by Sylvestre, Thibaut, et al. The article shows that the supercontinuum as generated from an ANDi-fiber typically has been achieved to be in the range from 500 nm and up to around 2000 nm. As described in this article, SC generation in ANDi-fibers develops from self-phase modulation (SPM) and optical wave breaking (OWB) and has been extensively studied. As further described in the article, the broadest possible spectrum is achieved from soliton-based SC, such as from modulation instability, where the fiber has both normal and anomalous dispersion.

However, the SC spectrum as generated from an ANDi-fiber, using high peak-power femtosecond pulses, leads to pulse-preserved, flat-top, fully coherent SC spectra as also confirmed by numerical simulations. For these reasons, ANDi SC is of particular interest for applications requiring high coherence as well as uniform and smooth spectral and temporal intensity profiles.

Even further, the article describes that by using a high pump power, the combined action of SPM and optical wave breaking (OWB) has been demonstrated to result in a spectrum with superb flatness covering the 670 - 1390 nm range. Due to the flatness of spectrum, ANDi SC sources have potential in applications, which so far were not able to use conventional, soliton-based fiber SC sources due to their noise or complex spectra and pulse shapes. An example of an application is spectral-domain OCT for high axial resolution 3D-imaging, where ANDi SC sources led to a paradigm shift as image quality is no longer limited by the SC noise but by detection shot noise. When compared to state-of-the-art commercial systems, ANDI SC-based OCT imaging significantly enhances contrast, sensitivity, penetration, and speed, thus paving the way for improved medical diagnosis, e.g. in the early-stage detection of skin cancer and other skin diseases.

A limitation in ANDi SC sources is clearly the spectral coverage. Nevertheless, as also described in the article by Sylvestre et al., ANDi SC sources have been extended far into the mid-IR to wavelengths up to 14 $\mu$m, e.g. using step-index, tapered or all-solid PCF designs.

Details of extension into the mid-IR wavelengths, and further details on ANDi SC generation is described in the sixth book chapter, "All-Normal Dispersion Fiber Supercontinuum: Principles, Design, and Applications of a Unique White Light Source", In: Alfano, R.R. (eds) "The Supercontinuum Laser Source", Springer, Cham., by Heidt, A.M., Spangenberg, DM., Rampur, A., Hartung, A., Bartelt, H. (2022).

This book chapter also describes that extension into the deep UV below 350 nm is a long-standing challenge in the SC generation community. The reason for this is that many approaches rely on dispersive wave generation from soliton effects. This requires phase matching with the original soliton, which is difficult to achieve for short wavelengths. However, as also explained in the book chapter by Heidt et al., the generation of short wavelengths in ANDi-fibers is extremely fast, and independent of any phase-matching condition, and could therefore be an interesting approach to extend short wavelength edge of fiber-generated SCs deeper into the UV region.

In view of this, a solution to extending the ANDi SC spectrum, in the following also called the ANDi SC, into the UV region is even proposed in the book chapter by Heidt et al., namely by generating a 400 nm wavelength (with peak powers of about 20-50 kW) from a 800 nm Ti-Sapphire laser via frequency doubling, and then use the generated 400 nm wavelength to spectrally broaden within the ANDi-fiber, whereby wavelengths down to 250 nm is expected. However, as described by Heidt et al., although the approach is promising, it has not yet been verified experimentally.

Regardless of the proposal being verified or not, there is clearly a desired need to extend the range of an ANDi SC into the UV.

## Summary

It is an objective of this disclosure to provide an all-normal dispersion (ANDi) supercontinuum (SC) source.

Further, it is an objective of this disclosure to provide an ANDi SC source to provide an ANDi SC spectrum, particularly from an ANDi SC source that generates light below 500 nm.

Even further, it is an objective of this disclosure to provide an ANDi SC source to provide an ANDi SC spectrum, particularly from an ANDi SC source that may generate UV light or extend into the ultraviolet domain.

Even further, it is an objective of this disclosure to provide an ANDi SC source that is more optimal than current solutions to ANDI SC sources.

These and other objectives have been solved by the all-normal dispersion-based supercontinuum system as defined in the claims and as described below in the present disclosure.

As described in the background section, the general idea of frequency converting a set of light-pulses to another set of light-pulses having a wavelength in the UV-domain, and then use other set of light-pulses in an ANDi-fiber to generate and ANDi SC in the UV-domain was proposed by Heidt et el., but never experimentally verified.

To generate ANDi SC in the UV-domain, it is likely preferred to use a solid core photonic crystal fiber (PCF), since the dispersion of such a fiber in the UV-domain is flat and has an absolute low value. For this reason, it is also most likely that the solution, as proposed by Heidt et al., is with the use of a solid core PCF. If attempted to be experimentally verified, this would work - at least from an academic point of view.

However, if a solid core ANDi-fiber is used together with UV-light, then such a solid core ANDi-fiber could rapidly (within days of operation) be severely damaged by the exposure to the UV-light, and thus not work in an industrial setting.

An alternative solution could be to use a hollow core PCF. A hollow core PCF, just called a hollow core fiber in the following, is known in the art. For example, a hollow core fiber may be as simple as a capillary fiber, just having a single capillary wall and an empty inner structure. Alternatively, a hollow core fiber may have anti-resonant structures within the capillary fiber, thereby forming what is known as an anti-resonant hollow core fiber, with or without nested substructures in the anti-resonant structures. Also alternatively, a hollow core fiber may be more complex - such as for example having a so-called Kagomé structure.

It is known that in a hollow core fiber, the dispersion in the UV-domain is far from flat and has an absolute high value. Accordingly, it is expected that to generate ANDi SC in the UV-domain, a hollow core fiber is not the obvious choice.

Furthermore, most hollow core fibers do not even have ANDi in the entire UV-domain, where SC is to be generated, and would therefore, by definition, not be able to generate ANDi SC in the UV-domain. A hollow core fiber typically has dispersion that is both in the normal dispersion regime and in the anomalous dispersion regime, which per definition therefore is not an ANDi-fiber.

A hollow core fiber can however be modified to have only normal dispersion in a specific region, for example from 0.5 $\mu$m to 2.0 $\mu$m. When the dispersion is low and has flat and only normal dispersion over the entire bandwidth of interest, then the hollow core fiber is per definition an ANDi-fiber in that wavelength range. The definition of low and flat normal dispersion is for example when the dispersion is with an absolute value between 0 and 1500 ps/nm/km.

With this definition, an ANDi-fiber in the region from 0.5 $\mu$m to 2.0 $\mu$m has been presented by Van Thuy Hoang et al, in the paper "All-normal dispersion supercontinuum generation in photonic crystal fibers with large hollow cores infiltrated with toluene", in Opt. Mater. Express 8, 3568-3582 (2018). Here, they provided the ANDi-fiber by infiltrating the hollow core with Toluene. Further, to generate an ANDi SC, they used a pump wavelength of 1030 nm, where the dispersion of the ANDi-fiber was both flat and low, i.e. the ANDi-fiber had an absolute value of around 150 ps/nm/km, such that self-phase-modulation could initiate the ANDi SC generation. By doing so, they generated an ANDi SC that spanned from 950 to 1100 nm, i.e. an ANDi SC spectrum of 150 nm.

Clearly, the above described ANDi-fiber is suitable for generating infrared light but does not extend into the UV region. To obtain UV light, one solution could be to use a pump wavelength that is closer to the UV region, as described above. However, sending light pulses with a center wavelength of less than 550 nm into the above-described fiber would, as also described above, may not be ideal for ANDi SC generation in the UV-domain, in particular because the dispersion here would have an absolute value of more than 1500 ps/nm/km. Thus, to generate UV SC-light from an ANDi-fiber, further investigations was needed.

The inventors of the presently disclosed all-normal-dispersion based supercontinuum system have firstly found that it was possible to engineer a hollow core fiber that has dispersion with an absolute value between 0 and 1500 ps/nm/km below a wavelength of 500 nm, so at least ANDi SC in the UV-domain could be investigated.

Secondly, the inventors of the presently disclosed all-normal-dispersion based supercontinuum system have found that when using such an engineered hollow core fiber, it is possible to generate an ANDi-SC in the UV-domain using a wavelength of less than 550 nm.

The inventors observed that both self-phase-modulation and optical wave-breaking occurred, and therefore confirmed that ANDi SC in the UV-domain agreed with the theory of ANDi SC generation.

It was surprising to generate ANDi SC in the UV-domain from a hollow core fiber with a very non-flat dispersion in the UV-domain, but also surprising that the ANDi-SC could be efficiently generated, and that the spectrum could be more than 100 nm wide.

In one aspect of the disclosure, there is disclosed an all-normal-dispersion (ANDi) based supercontinuum (SC) system, comprising a pulsed light-source-device configured to generate a first train of light-pulses, wherein each of the light-pulses is defined in a first frequency-domain, and wherein each of the light-pulses of the first train of light-pulses is defined by a first center-wavelength, wherein the first center- wavelength is below 550 nm.

The system further comprises an ANDi-fiber optically coupled to the pulsed light-source-device and to receive the light-pulses of the first train of light-pulses, wherein the ANDi-fiber is a hollow core fiber having only normal dispersion between an absolute value of 0 ps/nm/km and 1500 ps/nm/km in an ANDi-wavelength range from the first center wavelength and at least 50 nm to each side of the first center wavelength, whereby the hollow core fiber is configured to generate a SC spectrum based on the only normal dispersion of the hollow core fiber.

The hollow core fiber has a length configured to initiate both self-phase modulation (SPM) and optical wave-breaking (OWB) in the ANDi-wavelength range. The hollow core fiber further has a length configured to develop the SC spectrum by the combined effect of SPM and OWB, thereby defining that the SC spectrum is an ANDi SC spectrum.

This solution provides a UV-resilient fiber, and thus provides a long-lasting solution to be used in industry and for many applications involving the use of an ANDi-SC spectrum.

Further details are described in the following.

## Brief description of the drawings

The above and/or additional objects, features and advantages of the present disclosure, will be further described by the following illustrative and non-limiting detailed description of embodiments of the present disclosure, with reference to the appended drawing(s), wherein:

**Fig. 1** shows results of a simulation on how the dispersion depends on the wavelength of light in a hollow core optical fiber having an Argon gas in the hollow core, wherein the gas pressure is varied between 1 bar and 40 bar, the core having a diameter of 50 microns, and the capillary wall-thickness being 300 nm.

**Fig. 2** shows a first example of an ANDi SC system according to the present disclosure.

**Fig. 3** shows a first example of an ANDi SC system according to the present disclosure.

**Fig. 4-10** relate to a first example of ANDI SC generation according to the present disclosure using a first center-wavelength of 515 nm. These figures show results of simulations of a hollow core optical fiber in a system according to the present disclosure, wherein the hollow core fiber has an Argon gas in the hollow core, wherein the gas pressure is 160 bar, the core has a diameter of 20 microns, the capillary wall-thickness is 350 nm, and the fiber length is 1 m.

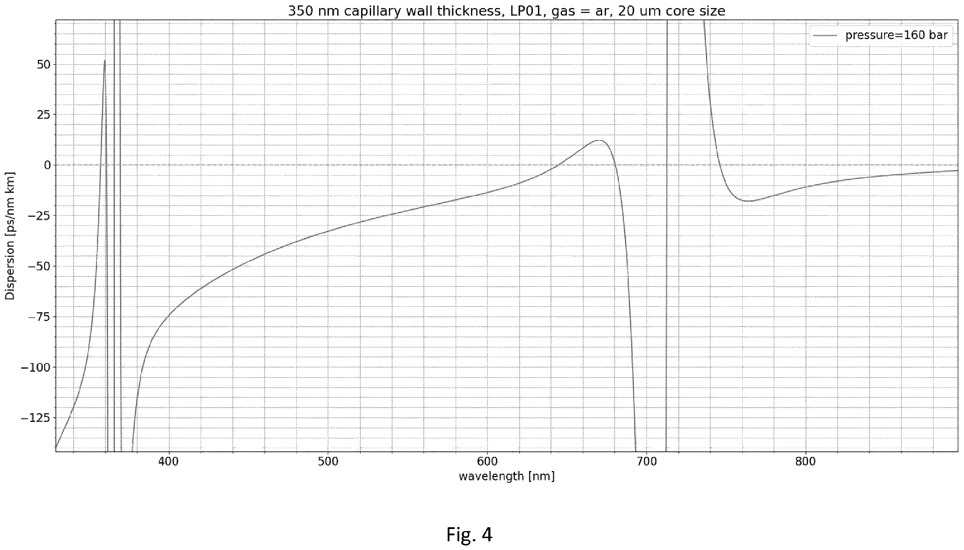

**Fig. 4** shows results of a simulation on how the dispersion depends on the wavelength of light in a hollow core optical fiber in a system according to the present disclosure.

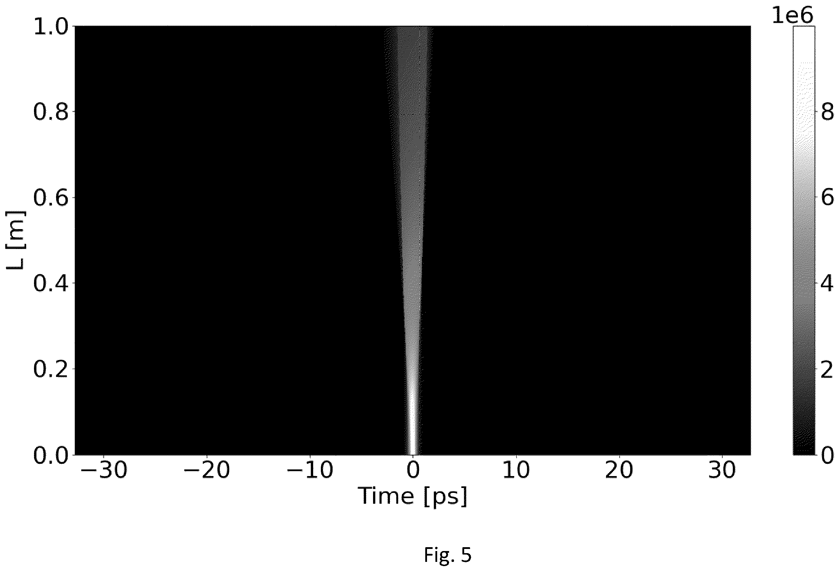

**Fig. 5** shows results of a simulation on how the temporal pulse development is through a hollow core optical fiber in a system according to the present disclosure.

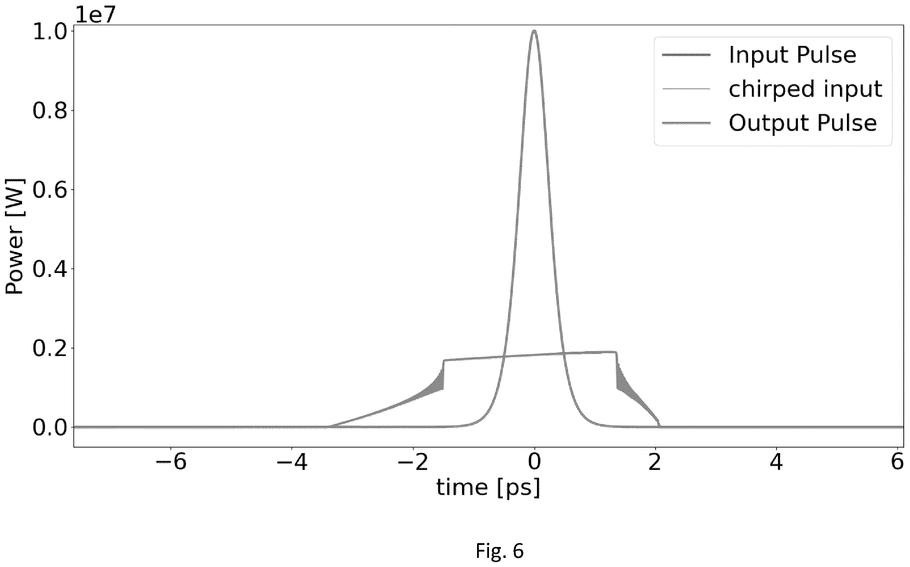

**Fig. 6** shows results of a simulation on the initial pulse duration and the output pulse duration after traveling in a hollow core fiber in a system according to the present disclosure.

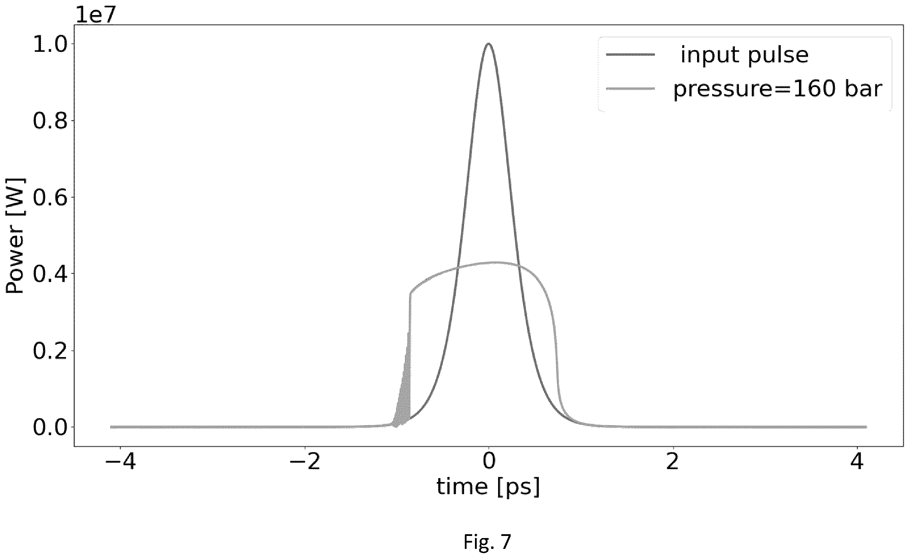

**Fig. 7** shows results of a simulation on the initial pulse duration and the pulse duration after traveling in a hollow core fiber to a distance known as the optical wave-breaking distance, in a system according to the present disclosure.

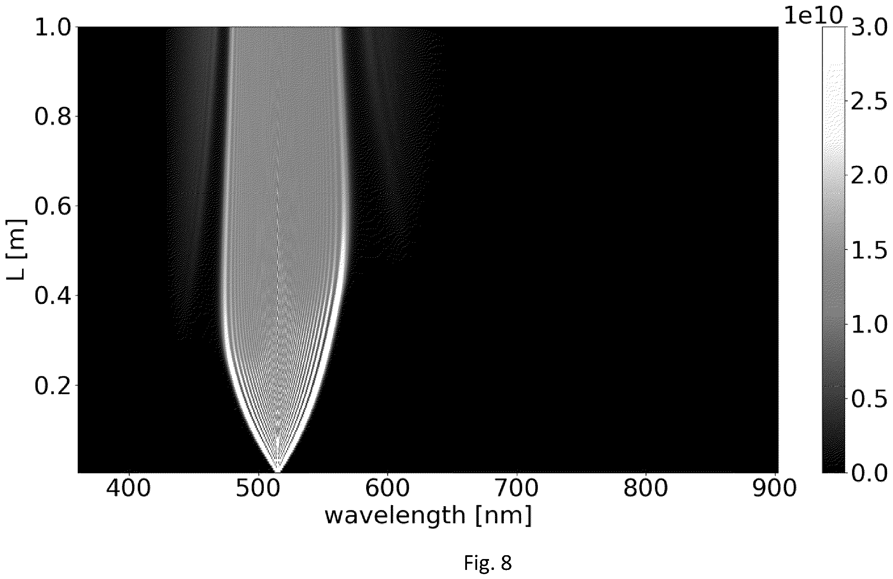

**Fig. 8** shows results of a simulation on how the spectrum develops by traveling in a hollow core fiber, in a system according to the present disclosure.

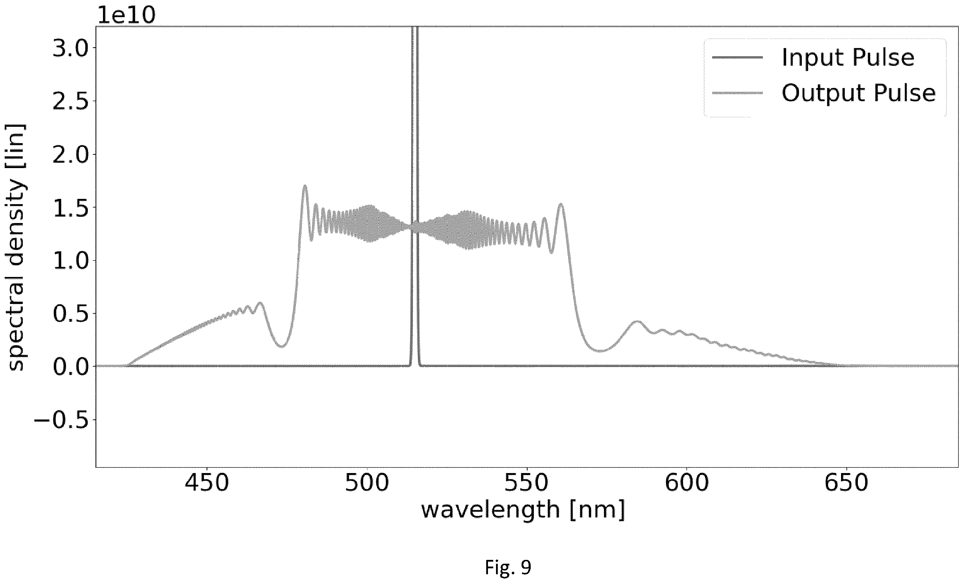

**Fig. 9** shows results of a simulation on the initial spectrum and the spectrum after traveling in a hollow core fiber in a system according to the present disclosure.

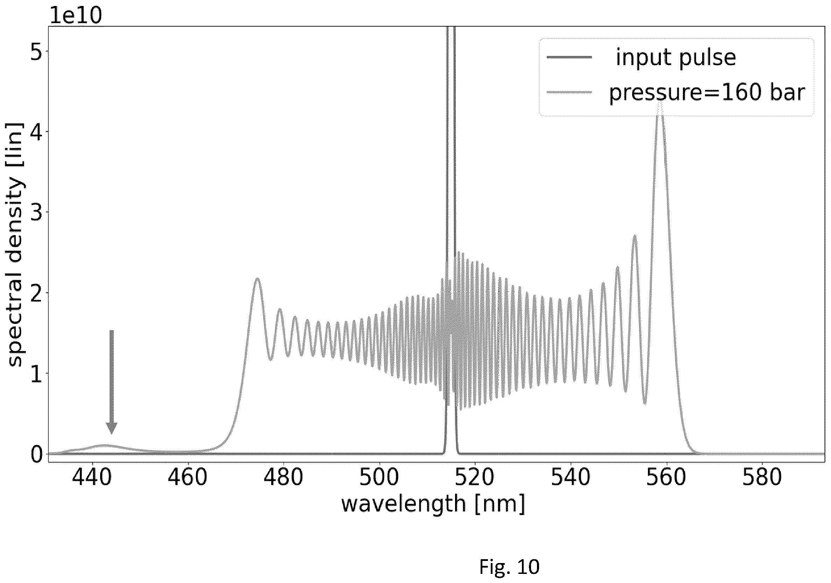

**Fig. 10** shows results of a simulation on the initial pulse spectrum and the spectrum after traveling in a hollow core fiber to a distance known as the optical wave-breaking distance, in a system according to the present disclosure.

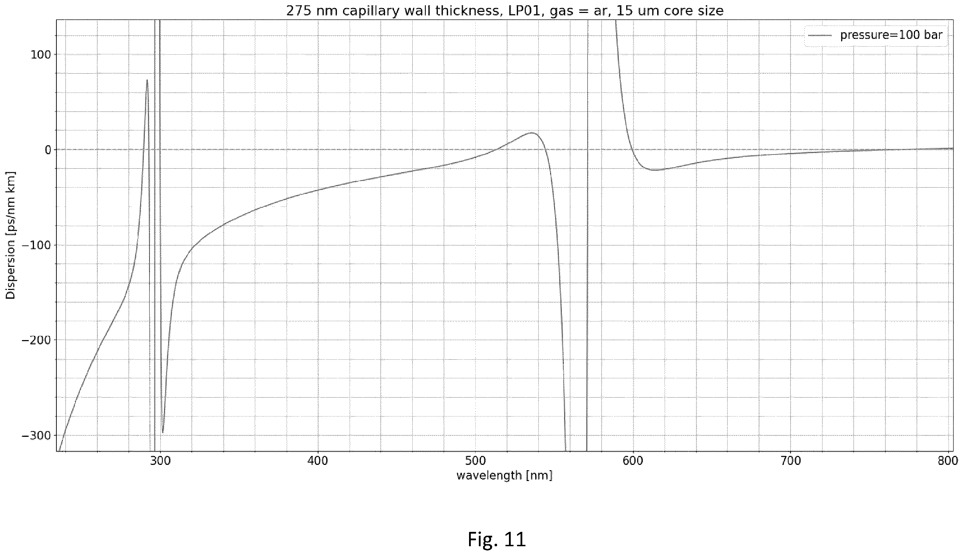

**Fig. 11-17** relate to a second example of ANDI SC generation according to the present disclosure using a first center-wavelength of 400 nm. These figures show results of simulations of a hollow core optical fiber in a system according to the present disclosure, wherein the hollow core fiber has an Argon gas in the hollow core, wherein the gas pressure is 100 bar, the core has a diameter of 15 microns, the capillary wall-thickness is 275 nm, and the fiber length is 2 m.

**Fig. 11** shows results of a simulation on how the dispersion depends on the wavelength of light in a hollow core optical fiber in a system according to the present disclosure.

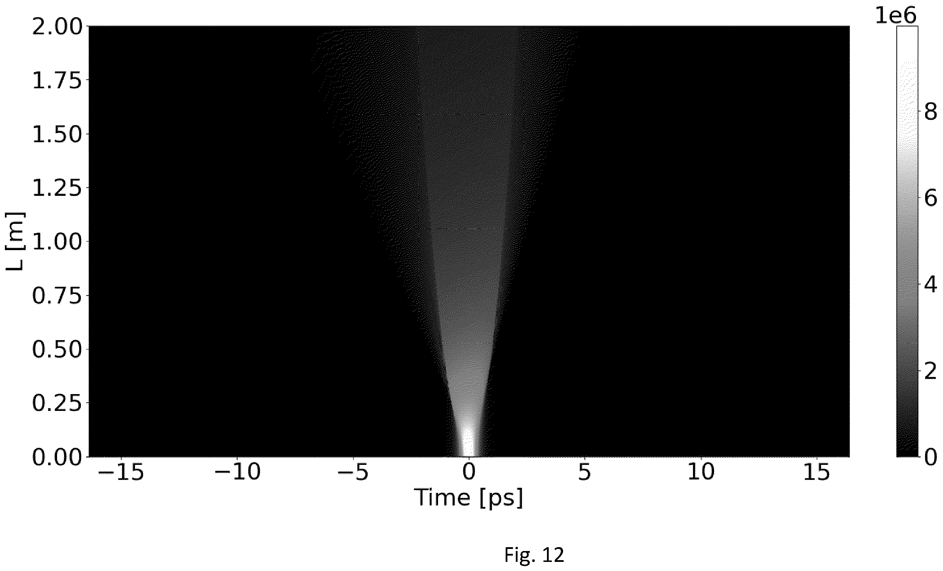

**Fig. 12** shows results of a simulation on how the temporal pulse development is through a hollow core optical fiber in a system according to the present disclosure.

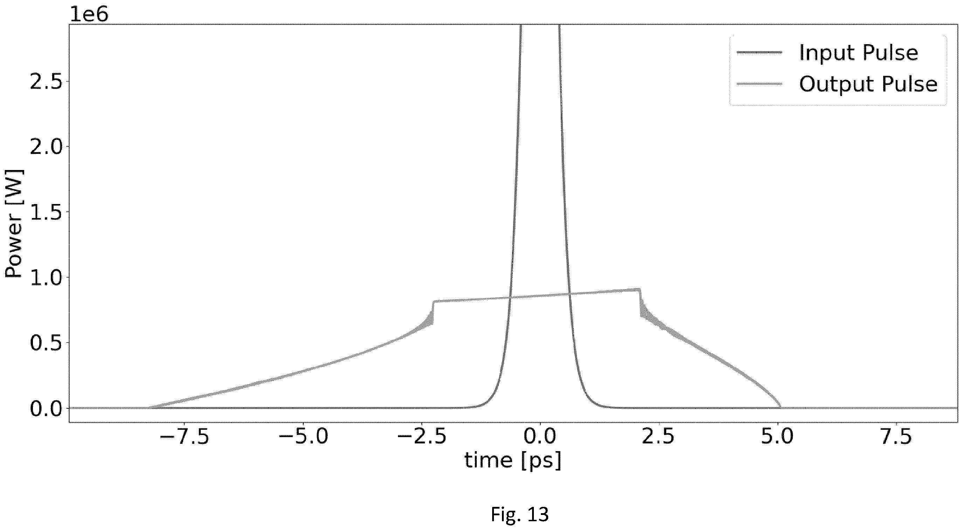

**Fig. 13** shows results of a simulation on the initial pulse duration and the output pulse duration after traveling in a hollow core fiber in a system according to the present disclosure.

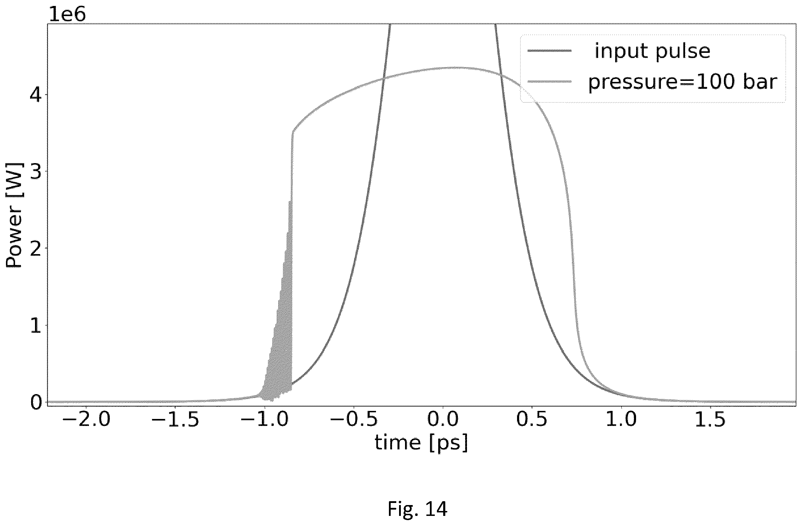

**Fig. 14** shows results of a simulation on the initial pulse duration and the pulse duration after traveling in a hollow core fiber to a distance known as the optical wave-breaking distance, in a system according to the present disclosure.

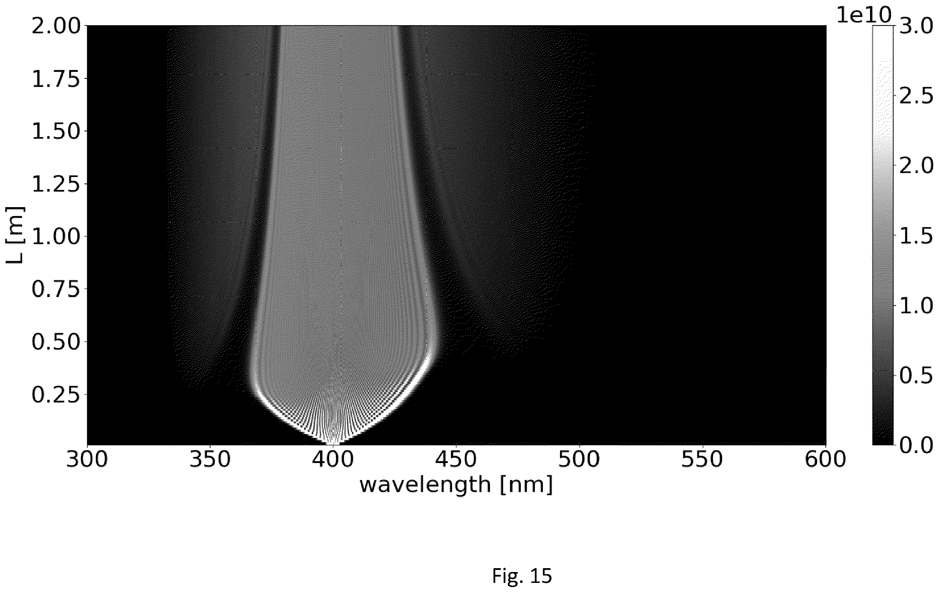

**Fig. 15** shows results of a simulation on how the spectrum develops by traveling in a hollow core fiber, in a system according to the present disclosure.

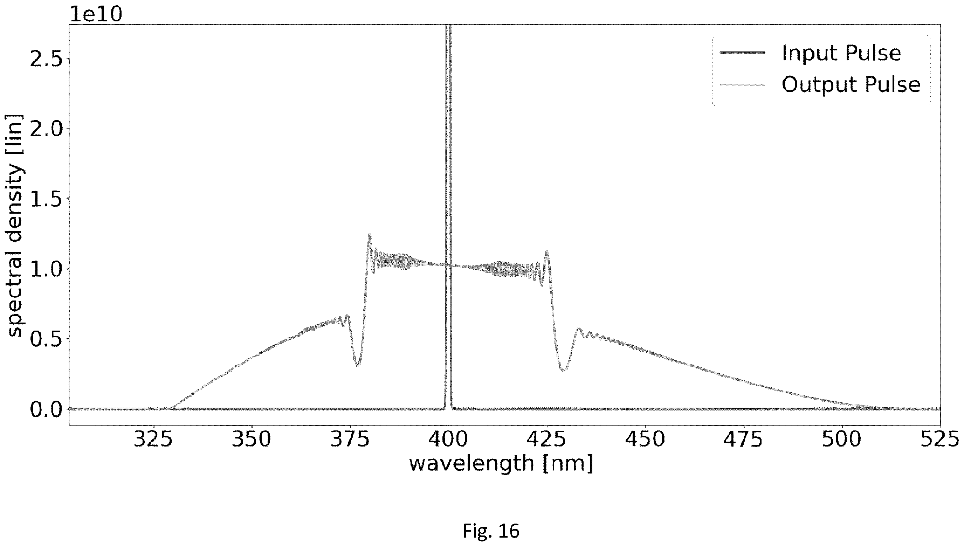

**Fig. 16** shows results of a simulation on the initial spectrum and the spectrum after traveling in a hollow core fiber in a system according to the present disclosure.

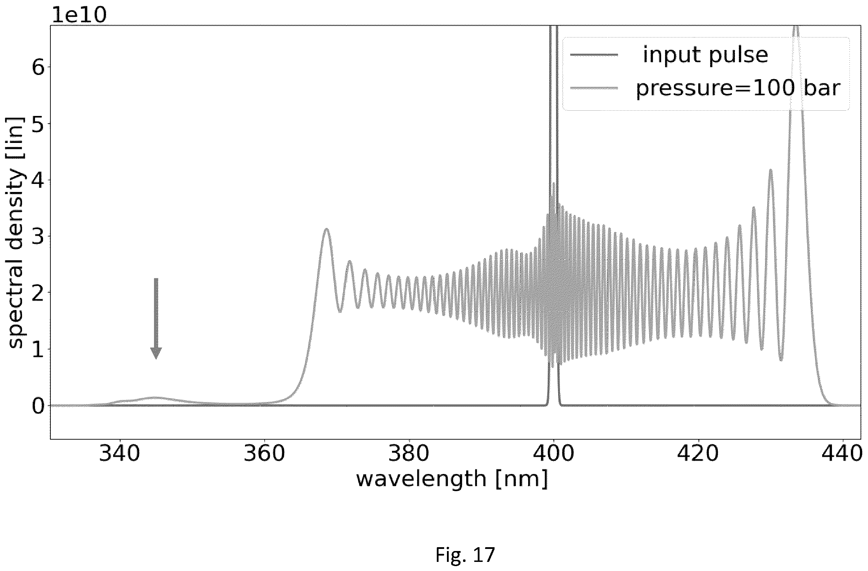

**Fig. 17** shows results of a simulation on the initial pulse spectrum and the spectrum after traveling in a hollow core fiber to a distance known as the optical wave-breaking distance, in a system according to the present disclosure.

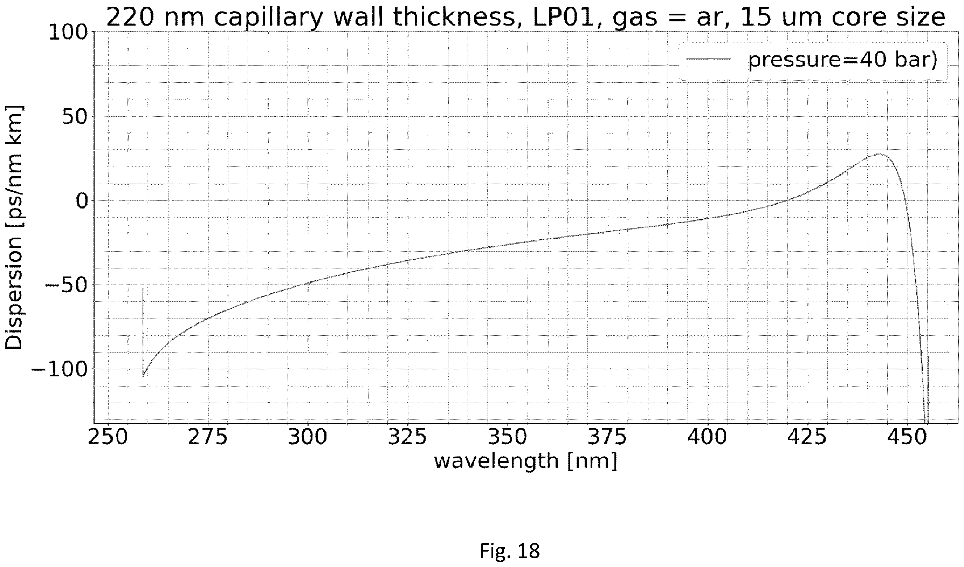

**Fig. 18-24** relate to a third example of ANDI SC generation according to the present disclosure using a first center-wavelength of 343 nm. These figures show results of simulations of a hollow core optical fiber in a system according to the present disclosure, wherein the hollow core fiber has an Argon gas in the hollow core, wherein the gas pressure is 40 bar, the core has a diameter of 15 microns, the capillary wall-thickness is 220 nm, and the fiber length is 2 m.

**Fig. 18** shows results of a simulation on how the dispersion depends on the wavelength of light in a hollow core optical fiber in a system according to the present disclosure.

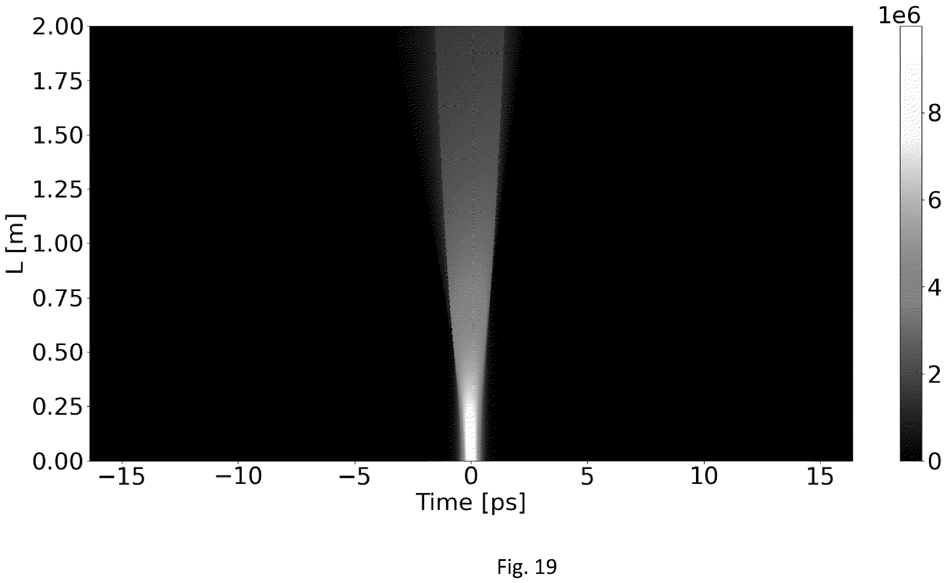

**Fig. 19** shows results of a simulation on how the temporal pulse development is through a hollow core optical fiber in a system according to the present disclosure.

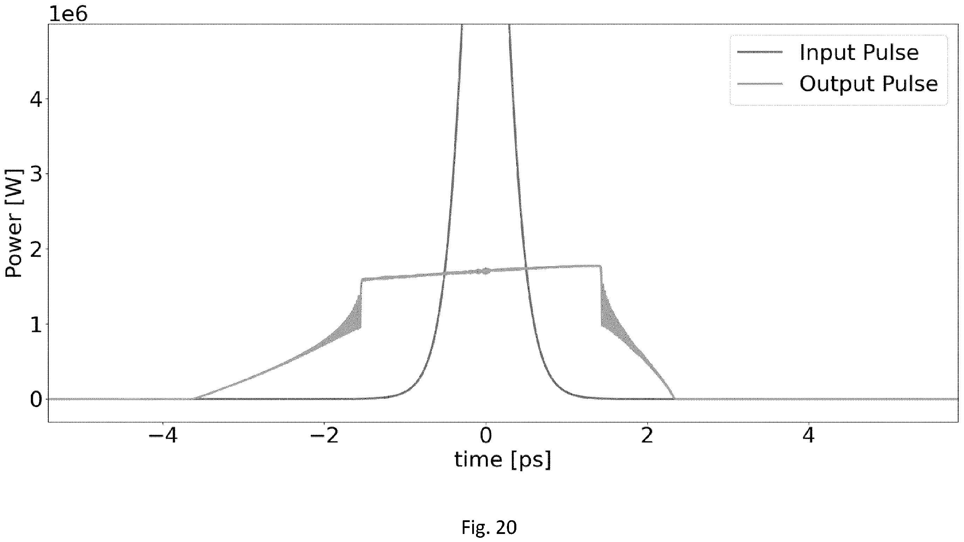

**Fig. 20** shows results of a simulation on the initial pulse duration and the output pulse duration after traveling in a hollow core fiber in a system according to the present disclosure.

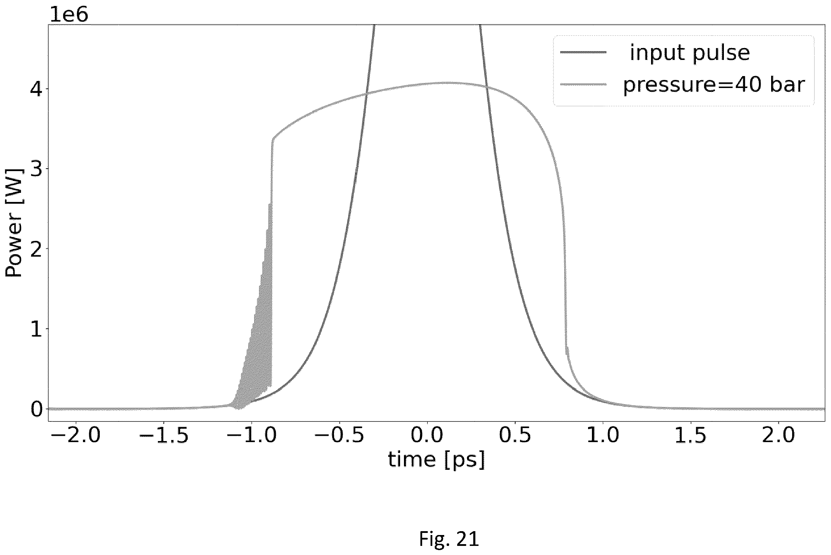

**Fig. 21** shows results of a simulation on the initial pulse duration and the pulse duration after traveling in a hollow core fiber to a distance known as the optical wave-breaking distance, in a system according to the present disclosure.

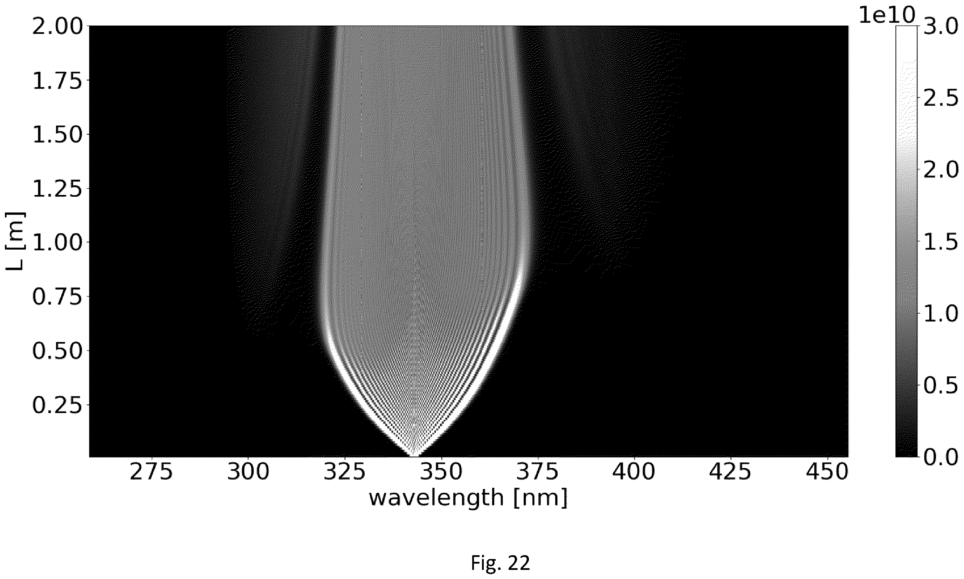

**Fig. 22** shows results of a simulation on how the spectrum develops by traveling in a hollow core fiber, in a system according to the present disclosure.

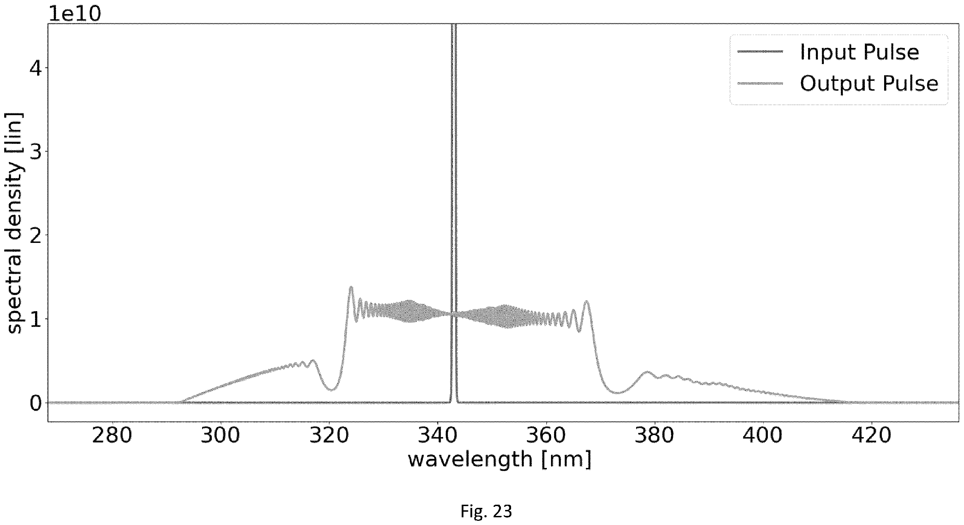

**Fig. 23** shows results of a simulation on the initial spectrum and the spectrum after traveling in a hollow core fiber in a system according to the present disclosure.

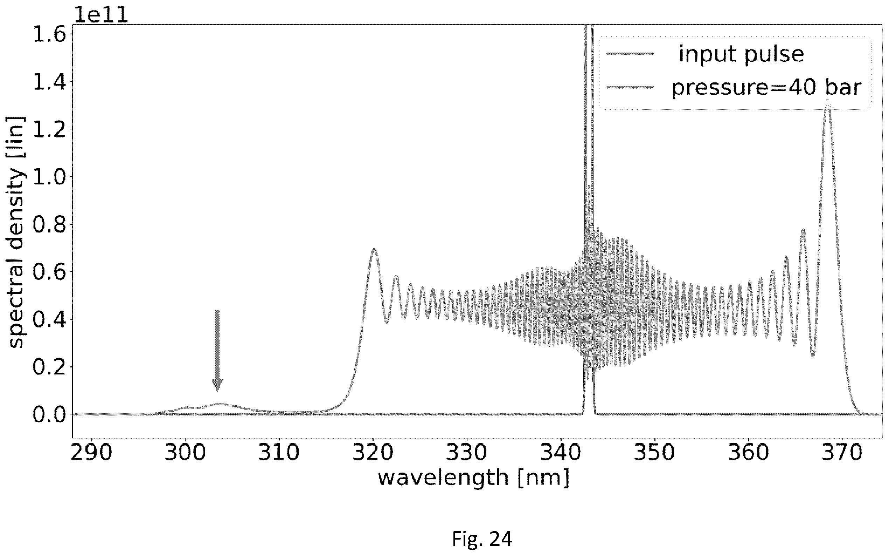

**Fig. 24** shows results of a simulation on the initial pulse spectrum and the spectrum after traveling in a hollow core fiber to a distance known as the optical wave-breaking distance, in a system according to the present disclosure.

## Detailed description

Frequency-conversion-element and frequency-broadening-element

As described in the background section, a solution for generating ANDi SC in the UV-region was proposed in the book chapter by Heidt et al., namely by generating a 400 nm wavelength (with peak powers of about 20-50 kW) from a 800 nm Ti-Sapphire laser via frequency doubling, and then use the generated 400 nm wavelength to spectrally broaden within an ANDi-fiber, whereby wavelengths down to 250 nm was expected. However, as also described in the background section, this was never experimentally verified, and most likely envisioned to be a solid core PCF.

Using a frequency-conversion-element to convert an input wavelength of $\lambda$ to half of that, $\lambda/2$, called frequency doubling or second harmonic generation, using a non-linear crystal, is well-known in the art. Further, as described in US 5,867,305A, the conversion efficiency in a non-linear crystal is related to the optical power density of the light-pulses, the wavelength, and the polarization stability. Further, a single narrow wavelength band is preferred, since linewidth broadening and chirp reduce doubling efficiency.

The solution to generate light-pulses having a UV-wavelength by using pulses with another wavelength to start with, as proposed by Heidt et al, is therefore a typical and cost-effective way of providing a wavelength below 550 nm. It is to be noted that using a frequency-conversion-element in the form of a non-linear crystal is not the only solution to generate a wavelength below 550 nm from a much high wavelength, and other techniques are presented in this disclosure.

In the present disclosure, the above-described solution of using second harmonic generation is firstly described in relation to the presently disclosed ANDi-SC source.

Accordingly, in one embodiment, the supercontinuum system further comprises a frequency-conversion-element, such that first train of light-pulses in the first frequency-domain is generated from the frequency-conversion-element and a second train of light-pulses, wherein the pulsed light-source-device is configured to generate the second train of light-pulses prior to the first train of light pulses being generated, wherein each of the light-pulses in the second train of light-pulses is defined in a second frequency-domain such that the second train of light-pulses has light-pulses defined by a second center-wavelength, wherein the second center-wavelength is below 1100 nm.

Further, in another embodiment, the frequency-conversion-element is a non-linear crystal configured for frequency-doubling the second frequency-domain to the first frequency-domain by second harmonic generation.

The two above-described embodiments are presented in this disclosure because they firstly demonstrate some embodiments of a SC system that provide a wavelength below 550 nm, which is suitable for ANDi SC generation. Secondly, the solution is here presented because it is desired to see how the presently claimed ANDi hollow core fiber operates with the specific wavelength of 400 nm, and to see whether it generates a UV-spectrum down to 250 nm, as a solid core PCF is expected to generate.

In some embodiments, the frequency-conversion-element is located inside the pulsed light-source-device. In other embodiments, the frequency-conversion-element is located externally to the pulsed light-source-device.

As will be presented in the examples, it was found by simulations that when the specific wavelength of 400 nm was used, for example generated from a Ti-Sapphire laser that generates pulses at 800 nm, which are then emitted into a non-linear crystal responsible for second harmonic generation, then an ANDi-SC spectrum can be generated down to around 330 nm.

Accordingly, the presently disclosed ANDi-SC source, having a hollow core fiber, may, on the one hand, not operate as effectful as an ANDi-SC with a solid core PCF. On the other hand, when the presently disclosed ANDi-SC source is used in combination with a frequency-conversion-element, as described above, which may rely on using high power light pulses, to efficiently generate high power light pulses in the UV-domain, or at least below 550 nm, then the hollow core fiber is resilient to the UV light-pulses (for example the 400 nm light pulses), and can therefore last much longer than an ANDi-SC with a solid core.

Using the presently disclosed ANDi-SC source in combination with a frequency-conversion-element, thus provides a solution for using light-pulses with high power, to provide light-pulses with high power in the UV-domain into the ANDi-fiber, but without damaging the ANDi-fiber.

In other embodiments, the supercontinuum system further comprises two or more frequency-conversion-elements, such that first train of light-pulses in the first frequency-domain is generated from the two or more frequency-conversion-elements and a second train of light-pulses, wherein the pulsed light-source-device is configured to generate the second train of light-pulses prior to the first train of light pulses being generated, wherein each of the light-pulses in the second train of light-pulses is defined in a second frequency-domain such that the second train of light-pulses has light-pulses defined by a second center-wavelength, wherein the second center-wavelength is below 1100 nm.

When using two or more frequency-conversion-elements, such as a first and a second frequency-conversion-element, the first frequency-conversion element may be a first non-linear crystal configured for frequency-doubling the second frequency-domain to the first frequency-domain by second harmonic generation, and the second frequency-conversion element may be a second non-linear crystal configured for sum-frequency generation (SFG) or difference-frequency generation (DFG).

Alternatively, when using a first and a second frequency-conversion-element, both the first frequency-conversion element and the second frequency-conversion element may be a first non-linear crystal configured for frequency-doubling the second frequency-domain to the first frequency-domain by second harmonic generation. In this manner, wavelength in the deep UV may be generated. For example, when starting from 1050 nm, this may first be frequency doubled to 525 nm in the first frequency-conversion element, and then frequency doubled to 262.5 nm in the second frequency-conversion element.

As previously described, a wavelength below 550 nm can be generated in other ways than relying on second harmonic generation. For example, such a wavelength may be generated in a non-linear element that is configured to broaden a spectrum.

Thus, in an alternative embodiment, the supercontinuum system further comprises one or more frequency-broadening-element(s), such that first train of light-pulses in the first frequency-domain is generated from the one or more frequency-broadening-element(s) and a second train of light-pulses, wherein the pulsed light-source-device is configured to generate the second train of light-pulses prior to the first train of light pulses being generated, wherein each of the light-pulses in the second train of light-pulses is defined in a second frequency-domain such that the second train of light-pulses has light-pulses defined by a second center-wavelength, wherein the second center-wavelength is below 1100 nm.

Further, in yet another alternative embodiment, the one or more frequency-broadening-element(s) is/are one or more non-linear element(s), such as a non-linear fiber and/or a non-linear crystal configured for frequency-broadening the second frequency-domain to a plurality of frequencies by a non-linear broadening effect, wherein the pluralities of frequencies comprises the first frequency-domain, and wherein the non-linear effect for example is four-wave mixing, self-phase-modulation, self-steepening, a Raman effect, and/or cross-phase modulation.

In some embodiments, the frequency-broadening-element(s) is/are located inside the pulsed light-source-device. In other embodiments, the frequency-broadening-element(s) is/are located externally to the pulsed light-source-device.

Further, in some embodiments, the frequency-broadening-element(s) is/are in optical communication with a filter-unit, wherein the filter-unit is configured to filter out the first frequency-domain from the plurality of frequencies.

The generated ANDi SC spectrum comprise a plurality of frequencies and pulses. The pulses of the ANDi SC spectrum may be modified for specific applications.

In other embodiments, the supercontinuum system further comprises a compressor configured to temporally compress the ANDi SC spectrum, such as to shorten pulses of the ANDi SC spectrum. The compressor may for example comprise a plurality of prisms, forming a so-called prism-compressor.

Pulsed light-source-device

The pulsed light-source-device, according to the present disclosure, is configured to generate a first train of light-pulses. In addition to the pulses being defined to have a first frequency-domain and a first center-wavelength, a pulse also is known to be defined in terms of at least a peak-power, Po, and a pulse width, $T_0$. The pulse width is also called a pulse duration.

In one embodiment, the pulsed light-source-device is a femto-second pulse source configured to generate the first train of light-pulses with light-pulses that are defined to have a pulse duration of less than 1 ps, such as around or less than 500 fs, such as around or less than 250 fs. Such pulse durations have been found to be optimal for ANDi SC generation.

In another embodiment, the pulsed light-source-device is a femto-second pulse source configured to generate the first train of light-pulses with light-pulses that are defined to have a peak power of more than 1 MW, such as around or more than 10 MW or 10 MW, such as around or more than 50 MW, such as around or more than 70 MW, such as around or more than 100 MW. Such peak powers have been found to be optimal for ANDi SC generation.

According to the present disclosure, the pulsed light-source-device is optically coupled to the ANDi-fiber, such that the ANDi-fiber receives the light-pulses of the first train of light-pulses. The optical coupling may be via one or more optical elements, such as one or more optical lens(es), and/or one or more optical mirror(s), and/or one or more prism(s).

Also, according to the present disclosure, the ANDi-fiber is a hollow core fiber having only normal dispersion between an absolute value of 0 ps/nm/km and 1500 ps/nm/km in an ANDi-wavelength range from the first center wavelength and at least 50 nm to each side of the first center wavelength.

Since the first center wavelength is below 550 nm, for example, 549 nm, then the only normal dispersion (i.e. to be understood as all-normal dispersion), with the absolute value between 0 ps/nm/km and 1500 ps/nm/km, ranges from 499 nm to 549 nm. The all-normal dispersion is in this example thus below 500 nm, since it extends to 499 nm. The presently disclosed hollow core fiber is thus different from the one described by Van Thuy Hoang et al. as they made a hollow core fiber that had absolute value between 0 ps/nm/km and 1500 ps/nm/km from 500 nm and above, namely up to 2000 nm.

In one embodiment, the first center wavelength is below 520 nm. This clearly provides an ANDi-wavelength range orANDi-region that spans from below 470 nm and up to but not including 570 nm.

In other embodiments, the first center-wavelength is around 532 nm or below that, or around 525 nm or below that, or around 400 nm or below that, such as around 343 nm.

Lowering the first center wavelength, as described above, allows for deeper UV generation within the ANDi-region, as will be shown in the examples.

Further, lowering the first center wavelength has implications on the hollow core fiber. According to the present disclosure, the ANDi-fiber is a hollow core fiber having only normal dispersion between an absolute value of 0 ps/nm/km and 1500 ps/nm/km in an ANDi-wavelength range from the first center wavelength and at least 50 nm to each side of the first center wavelength.

In other words, and in one embodiment, the hollow core is designed and/or optimized around the first center wavelength, such that the dispersion has an absolute value of 0 ps/nm/km and 1500 ps/nm/km to each side of the first center wavelength. No such hollow core fiber has previously been produced around a center wavelength of less than 550 nm and/or used to generate ANDi-SC below 500 nm.

The wavelengths of around 532 nm or below that, or around 525 nm or below that, or around 400 or below that may, as previously described, be generated due to second harmonic generation, such as in a non-liner crystal.

Accordingly, in one embodiment, the second center-wavelength is around 1064 nm or below that, or around 1050 nm or below that, such as around 1030 nm, or around 800 nm or below that.

As just described, the hollow core fiber, according to the present disclosure, is designed around the first center wavelength. It is further known that a hollow core fiber, or a non-linear fiber in general, may be defined by at least a non-linear coefficient, $\gamma$, and a group-velocity dispersion parameter, $\beta_2$.

With such definitions of a hollow core fiber, a soliton number, N, can be defined for the pulsed-light source in combination with the hollow core fiber. The soliton number for each of the pulses from the pulsed light-source-device in combination with the hollow core fiber, is defined by a soliton number, N, where

$$N^2 = T_0^2\, \gamma\, P_0 / |\beta_2|.$$

In one embodiment, each pulse in the first train of light-pulses is, together with the hollow-core fiber, defined by a soliton number, N, being larger than 50, such as larger than 100 or even larger than 200 or larger than 1000.

In another embodiment, each pulse in the first train of light-pulses is, together with the hollow-core fiber, defined by a soliton number, N, being between 50 and 500, preferably between 50 and 200, more preferably between 100 and 150.

Having a soliton number, as defined in the above embodiments, has been found to provide efficient ANDi SC generation in an ANDi-range below 500 nm.

It is to be noted that using a large soliton number as described above, typically is provided with high peak powers, and because N scales with the peak power. Accordingly, the described soliton number would typically lead to high damage of a solid core fiber, both due to high peak power and UV wavelengths, and thus not work - at least not for a very long time. The inventors of the present disclosure have found that the herein disclosed hollow core fiber is able to withstand both high peak power and UV radiation as defined by the here defined soliton numbers.

### Hollow core fiber

In one embodiment, the hollow core fiber is a polarization maintaining fiber. A polarization maintaining hollow core fiber may be provided by for example by an embodiment, wherein the hollow core fiber comprises one or more anti-resonant resonant structures. The one or more anti-resonant structures may be in the form of hollow tubes, also called capillary tubes, that are inside the hollow core and attached to an inner wall of the hollow core. When a plurality of anti-resonant resonant structures is configured with different wall thicknesses, the polarization maintaining property may be achieved. Accordingly, in a related embodiment, the hollow core fiber comprises a plurality of anti-resonant resonant structures in the form of hollow tubes or capillary tubes, wherein the hollow tubes comprise a tube-wall or capillary-wall, having a wall-thickness, wherein at least two of the anti-resonant structures have different wall-thicknesses. When at least two of the anti-resonant structures have different wall-thicknesses, the hollow core fiber may become birefringent. The birefringence has been found to depend on the difference in wall-thickness and the relative position of the hollow tubes with larger and smaller wall-thickness.

In some embodiments, the birefringence is in the order $10^{-4}$ or higher. The advantage of having such a birefringence is to efficiently suppress polarization-dependent noise amplification processes, such as polarization modulation instability (PMI). PMI is desired to be suppressed in an ANDi-fiber, because the PMI may cause a significant degradation of the coherence and the stability of the ANDi SC, thus impacting the applications of ANDi SC.

In another embodiment, the hollow core fiber is a non-polarization maintaining fiber. This may be achieved in an embodiment, where the hollow core fiber comprises one or more anti-resonant resonant structures, and where a plurality of anti-resonant resonant structures is configured with identical wall thicknesses.

An anti-resonant hollow core fiber is used to provide low optical loss, i.e. high optical transmission efficiency, and thus also has advantages in ANDi SC generation. When an anti-resonant hollow core fiber is also polarization maintaining, as described above, it may, in addition to the low optical loss, also provide high coherence and stability of the ANDi SC.

As described above, using a hollow core fiber that is both anti-resonant and polarization maintaining, is advantageous in ANDi SC generation caused by the effects of the anti-resonant structures on the ANDi SC spectrum.

It is to be noted that in the embodiments, where the hollow core fiber comprises one or more anti-resonant structures, the anti-resonant structures may provide anti-resonant guidance over a specific wavelength range. However, the anti-resonant structures also may provide a resonant wavelength or resonant wavelength bands, where guidance may not be possible. The resonant wavelength or resonant wavelength bands depends on the thickness of the tube walls or the capillary walls. Special care may therefore be considered in the design or the manufacture of the hollow core fiber when using a hollow core fiber comprising anti-resonant structures for generating an ANDi SC spectrum, particularly because the ANDi SC may only be generated in an ANDi wavelength range when there exist no resonant wavelength or resonant wavelength-bands therein.

For example, when using a hollow core fiber with anti-resonant structures having a wall thickness of 300 nm, there may be resonant wavelengths around 300 nm, but also around 600 nm. These wavelengths define a first ANDi-band. Accordingly, when using such an anti-resonant fiber for ANDi SC generation, the ANDi SC spectrum may only be defined to be an ANDi SC within the first ANDi-band, i.e. from above 300 nm and below 600 nm. Ideally, the wall thickness is made as thin as possible, but this may be impractical to manufacture. Accordingly, in a practical example, the wall thickness may be of 300 nm. When using such a wall thickness, which provides the above described ANDi-band, the inventors have found that in one embodiment, an optimal ANDi SC spectrum may be generated when the first center wavelength is between the two resonant wavelengths, i.e. around the middle of the ANDi-band. In this example, the center wavelength would thus be at 450 nm.

The inventors have also found that in another embodiment, an optimal ANDi SC spectrum may be generated when the OWB is also generated within the first ANDi-band.

Generally, the inventors have found that when using a hollow core fiber with anti-resonant structures having a wall thickness, then in one preferred embodiment, the wall thickness of at least one of the anti-resonant structures is between a factor of 1.4 and 1.6 smaller than the first center wavelength.

This also applies the other way around. Accordingly, in the preferred embodiment, the first center wavelength is between a factor of 1.4 and 1.6 larger than the wall thickness of at least one of the anti-resonant structures.

Accordingly, as previously described, in one embodiment, the hollow core fiber has one or more anti-resonant resonant structures. In another embodiment, the one or more resonant structures is a plurality of capillary tubes, each of the capillary tubes having a capillary thickness, and wherein the capillary thickness is between a factor of 1.3 and 1.7 smaller than the first center- wavelength, more preferably wherein the capillary thickness is between a factor of 1.4 and 1.6 smaller than the first center-wavelength, such as around a factor 1.5 smaller than the first center-wavelength. In yet another embodiment, the one or more resonant structures is a plurality of capillary tubes, each of the capillary tubes having a capillary thickness, and wherein the capillary thickness for at least two of the plurality of capillary tubes is different, whereby the hollow core fiber becomes birefringent to efficiently suppress polarization-dependent noise amplification processes.

For optimal performance of the herein disclosed SC system, the inventors have found that in a preferred embodiment, the hollow core fiber has only normal dispersion between an absolute value of 0 ps/nm/km and 500 ps/nm/km in the wavelength range. In a more preferred embodiment, the hollow core fiber has only normal dispersion between an absolute value of 0 ps/nm/km and 300 ps/nm/km in the wavelength range. In a most preferred embodiment, the hollow core fiber has only normal dispersion between an absolute value of 0 ps/nm/km and 150 ps/nm/km in the wavelength range.

The hollow core fiber may thus be defined to have such an all-normal dispersion in a desired wavelength range.

To provide a very broad ANDi SC spectrum, it is preferred that the ANDi-wavelength range is from the first center wavelength and at least 90 nm to each side of the first center wavelength.

A hollow core fiber as defined above, may be produced, or manufactured, in several ways.

In one embodiment, the only normal dispersion in the ANDi-wavelength range is provided by the hollow core fiber being filled with a gas that is pressurized to a pressure of more than 20 bars, such as more than 50 bars, preferably around or more than 100 bars, such as around or more than 150 bars. An increase in gas pressure reduces the dispersion and may thus be adjusted to provide the all-normal dispersion hollow core fiber as desired and for optimal performance.

The inventors of the presently disclosed supercontinuum system have found that, in a preferred embodiment, the gas pressurized, such as to obtain optimal performance and/or an optimal ANDi SC spectrum, to a pressure, wherein the pressure is selected to depend on the first center-wavelength. It has been found that the lower the first center-wavelength, the less the pressure.

In one embodiment, the pressure is selected such that for a first center-wavelength above 500 nm, i.e. up to 550 nm, the pressure is around or more than 150 bar. In another embodiment, the pressure is selected such that for a first center-wavelength between 400 nm, and up to around 500 nm, the pressure is between 80 bar and around 150 bar. In yet another embodiment, the pressure is selected such that for a first center-wavelength between 300 nm and up to around 400 nm, the pressure is between 20 bar and 80 bar.

To produce a hollow core fiber with a pressurized gas, the hollow core fiber may be located within a gas chamber that is configured to withstand high pressures as described above, whereafter the gas chamber, and the hollow core fiber, is then pressurized. After pressurizing the gas chamber, the gas chamber may be securely sealed such that the gas pressure may be maintained over a long period of time.

When producing or manufacturing a hollow core fiber, the core diameter may be optimized to guide the light and to optimize the dispersion. Further, the core diameter may be selected to guide single mode light in an optimal manner. In one embodiment, the hollow core fiber has a core diameter of less than 50 microns, preferably less than 30 microns, such as less than 20 microns. Such diameters have been found to provide an optimal ANDi SC. In general, it has been found that the lower the first center wavelength, the smaller the diameter. Specifically, in a preferred embodiment, to generate light below 500 nm, the hollow core fiber may be less than 50 microns, preferably less than 30 microns, such as less than 20 microns.

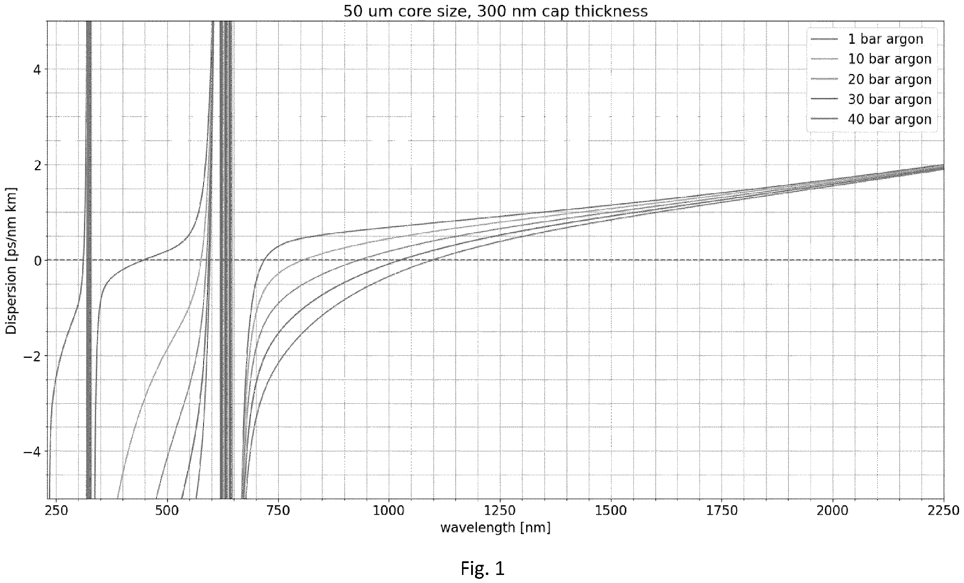

An example to illustrate many of the above embodiments, particularly of the fiber, is now described in relation to **Fig. 1,** showing the simulated results of dispersion as a function of the wavelength of light being transmitted through a hollow core fiber. In this example, the hollow core fiber has been designed with a core diameter of 50 microns and filled with Argon gas having different pressures, namely 1 bar, 10 bar, 20 bar, 30 bar and 40 bar. The designed hollow core diameter has a diameter, which may not be optimal for guidance of wavelengths below 550 nm, but rather wavelengths in the 1000-1100 nm range. As a matter of fact, the designed fiber is not intended to be used for ANDi SC, but rather designed for being pumped with wavelengths in 1000-1100 nm range, where such a wavelength is close to the zero-dispersion-wavelength (ZDW), which also depends on the gas pressure within the hollow core fiber, as can also be seen from **Fig. 1.** Accordingly, the fiber is designed to be pumped with a wavelength that is close to the ZDW, such that a spectrum can be generated due to SPM, and only SPM. In such a pumping scheme, the generated spectrum will be different from an ANDi SC spectrum, particularly because the wavelength will broaden both in the normal and anomalous regime. However, the designed fiber further comprises anti-resonant structures having a wall thickness of 300 nm. Accordingly, as can be seen from **Fig. 1,** this generates two clearly visible resonant wavelengths around 300 nm and 600 nm, which are independent of the gas pressure. From above 300 nm and below 550 nm, the dispersion is both normal and anomalous when the gas pressure is 1 bar. There is even a ZDW around 450 nm for. By increasing the gas pressure, the dispersion is engineered and lowered more and more to become all-normal (having only negative dispersion) from 400 nm to less than 600 nm. The designed hollow core fiber may thus be used to generate ANDi SC by using a first center wavelength of around 400-500 nm, where the optimum may depend on the gas pressure. As previously described, the designed fiber is not specifically optimized for ANDi SC generation, but rather for SPM generated SC using a wavelength of around 1030 nm and generates SC in both the anomalous and normal regime. The designed hollow core fiber however may be used for ANDi SC generation if the pump wavelength is changed from 1000-1100 nm to 400-500 nm. However, as can also be seen from **Fig. 1,** the dispersion drops rapidly to values below -5 ps/nm/km, and far below -300 ps/nm/km (not shown in **Fig. 1**). Such dispersion may not be optimal for ANDi SC continuum generation, and a better optimum may be reached if the dispersion is above -150 ps/nm/km. Accordingly, the dispersion as shown in **Fig. 1** shows a sub-optimal dispersion for ANDi-SC generation but is included here to illustrate the variations on the ZDW and dispersion curves as dependent on the gas pressure. It is to be noted that although the designed fiber has a dispersion as shown in **Fig. 1,** and previously designed to be used for SC generation by primarily SPM broadening, particularly by using a pump wavelength of 1030 nm, it was not obvious to change the pump wavelength to below 550 nm, and only use the all-normal dispersion regime for ANDi SC generation. It was not obvious that the hollow core fiber with the dispersion as shown in **Fig. 1** could be used for ANDi SC generation in the ultraviolet domain, or in the domain from 300 nm to 600 nm due to the dispersion being far from flat and thus not believed to work. It was only due to further optimization and testing that led the inventors to realize that a hollow core fiber could be used to generate ANDi SC in the UV domain, as now described in the present disclosure.

It is further to be remembered that ANDi SC is generated due to both SPM and optical wave-breaking (OWB). In SC systems which only rely on primarily SPM, as described above, the onset of OWB is typically limited, and desired to be prevented. The reason for limiting OWB in a non-ANDi based SC system may be to provide two characteristic SPM side lobes at the edges of the SC spectrum. A typical way of preventing the onset of OWB, such that the two side lobes are not washed out in a non-ANDi based SC, is to use a very short fiber, such that the OWB effect cannot be initiated or further developed.

In contrast, in an ANDi SC based system, according to the present disclosure, the length of the hollow core fiber is specifically configured to initiate both self-phase modulation (SPM) and optical wave-breaking (OWB) in the ANDi-wavelength range. The OWB provides the characteristic ANDi SC spectrum with superb flatness, and is therefore inherent in the definition of an ANDi SC. The length configured to initiate optical wave-breaking is a well-known parameter in the field of SC generation and fiber optics, known as the optical wave-breaking distance. The optical wave-breaking distance is given by the following equation (see for example the article "Wave breaking in nonlinear-optical fibers", by D. Anderson, et al, in Optical Society of America, from 1992):

$$L_{WB} = \frac{L_D}{\sqrt{N^2/N_{min}^2 - 1}}$$

The parameter, $L_D$, is known as the dispersion length, which defines the length of a fiber over which dispersive effects may dominate. The parameter, $L_D$, is also known to be expressed as $L_D = T_0^2/|\beta_2|$, where $T_0$ is the pulse width and $\beta_2$ is a group-velocity dispersion parameter, as previously described.

The parameter, $N_{min}$, is the minimum soliton number where OWB occurs or is initiated. The minimum soliton number is $N_{min}^2 \approx 1.12$. Accordingly, the length configured to initiate optical wave-breaking may for example be analytically expressed as:

$$L_{WB} \approx \frac{L_D}{\sqrt{N^2/1.12 - 1}}$$

In accordance with the presently disclosed ANDi SC system, the hollow core fiber further has a length configured to develop the SC spectrum by the combined effect of SPM and OWB, thereby defining that the SC spectrum is an ANDi SC spectrum. For this reason, the length configured to develop the spectrum by the combined effect of SPM and OWB in the ANDi-wavelength range is longer than just the optical wave-breaking distance.

In most embodiments, where OWB is desired to be initiated, according to the present disclosure, and thus where OWB is initiated and/or developed further, as in the presently disclosed Andi SC system, the hollow core fiber has a length of more than 0.25 m, such as around or more than 0.5 m, such as around or more than 1 m, such as around 2 m.

In some embodiments, the first center-wavelength may be selected such that both SPM and OWB may develop in the hollow core fiber in the generation of the ANDi SC spectrum. For example, the first center-wavelength may be selected to be separated by more than 20 nm from a resonant wavelength, and/or on the same side of the resonant wavelength where the first center-wavelength is located.

In one embodiment of the presently disclosed ANDI SC system, the hollow core fiber may be filled with Argon. In other embodiments of the presently disclosed ANDI SC system, the hollow core fiber is filled with pressurized air. In alternative embodiments, the hollow core fiber is filled with a pressurized gas different from air, and wherein the gas is a Raman inactive gas, preferably such as Argon, Helium, Neon, Krypton and Xenon, or a mixture thereof. These gases, and/or the air, and/or the pressure thereof, provide different dispersion in the hollow core optical fiber. The gasses, and/or the air, and/or the pressure thereof, may be selected dependent on the desired ANDi SC spectrum. For example, in one embodiment, and for optimal ANDi SC generation, the pressure may be selected such that OWB does not reach anomalous dispersion, for example to the left and/or to the right side of the first center-wavelength.

As described in the background section, the dispersion may also be engineered by other means than pressurized gas and/or air. For example, in some embodiments, the hollow core fiber may be filled with a liquid that is different from gas, such as Toluene, but also Benzene or Nitrobenzene may be used.

Spectrum of the ANDi-SC

According to the presently disclosed ANDi SC system, the first center-wavelength is below 550 nm, and the ANDi wavelength-range is least 50 nm to each side of the first center-wavelength, where the ANDi-SC spectrum is generated. Thus, the generated ANDi SC spectrum extends to wavelengths that are at least below 500 nm. In other words, the generated ANDi SC spectrum or a part thereof is below 500 nm.

In most embodiments, the generated spectrum of the ANDi-SC has a bandwidth that is more than 100 nm. Several examples of spectra having a bandwidth of more than 100 nm, as generated by the presently disclosed ANDi SC system, are described in **Examples 3-5.**

Example 1 - A first example of an ANDi SC system according to the present disclosure:

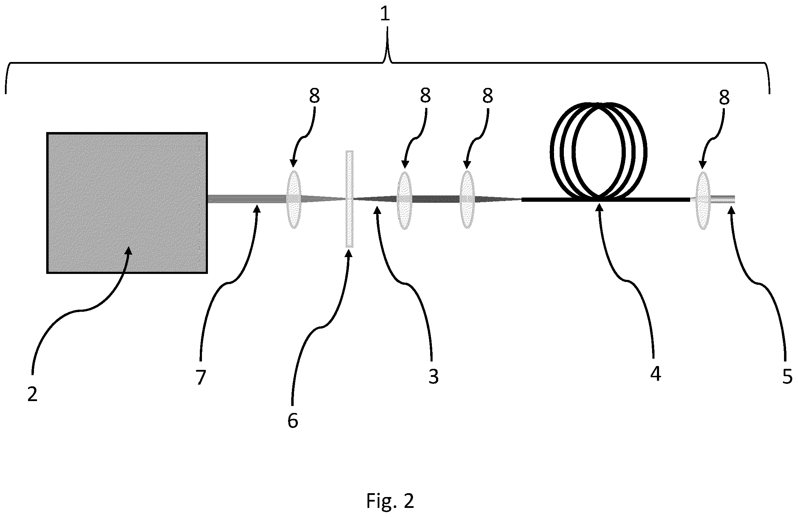

**Fig. 2** shows a first example of an ANDi SC system **1** according to the present disclosure. The ANDi SC system **1** comprises a pulsed light-source-device **2** configured to generate a first train of light-pulses **3.** Each of the light pulses in the first train of light-pulses **3** is defined in a first frequency-domain, and wherein each of the light-pulses of the first train of light-pulses is defined by a first center-wavelength, wherein the first center-wavelength is below 550 nm.

The ANDi SC system **1,** further comprises an ANDi-fiber **4** optically coupled to the pulsed light-source-device **2** and to receive the light-pulses of the first train of light-pulses **3.**

The ANDi-fiber **4** is a hollow core fiber having only normal dispersion between an absolute value of 0 ps/nm/km and 1500 ps/nm/km in an ANDi-wavelength range from the first center-wavelength and at least 50 nm to each side of the first center-wavelength. In this manner, the hollow core fiber **4** is configured to generate a SC spectrum **5** based on the only normal dispersion of the hollow core fiber **4.**

The hollow core fiber **4** has a length configured to initiate optical wave-breaking, whereby the SC spectrum **5** defines an ANDi SC spectrum.

The ANDi SC system **1** further comprises a frequency-conversion-element **6,** such that first train of light-pulses **3** in the first frequency-domain is generated from the frequency-conversion-element **6** and a second train of light-pulses **7.**

The pulsed light-source device **2** is configured to generate the second train of light pulses **7** prior to the first train of light pulses **3** being generated. Each of the light-pulses in the second train of light-pulses **7** is defined in a second frequency-domain such that the second train of light-pulses **7** has light-pulses defined by a second center-wavelength, wherein the second center-wavelength is below 1100 nm.

The frequency-conversion-element **6** is a non-linear crystal configured for frequency-doubling the second frequency-domain to the first frequency-domain by second harmonic generation. The light-pulses **7** from the pulsed light-source device **2** may for example be with a second center-wavelength of 1030 nm, such that the light-pulses **3** from the non-linear crystal **6** has a first center-wavelength of 515 nm.

As can also be seen from **Fig. 2,** the non-linear crystal **6** is located externally to the pulsed light-source device **2,** but in an alternative embodiment, the non-linear crystal could be located as an integrated unit in the pulsed light-source device **2.**

As can further be seen from **Fig. 2,** there is an optical coupling between the pulsed light-source device **2** and the non-linear crystal **6.** Further, there is an optical coupling between the non-linear-crystal **6** and the hollow core fiber **4.** In this example, all the optical coupling is via a plurality of optical elements, in this case a plurality of optical lenses **8.** Finally, the hollow core fiber **4** is optically coupled to an optical lens **8** to transmit the ANDi-SC light **5,** here in the form of collimated light.

**Example 2** - A second example of an ANDi SC system according to the present disclosure:

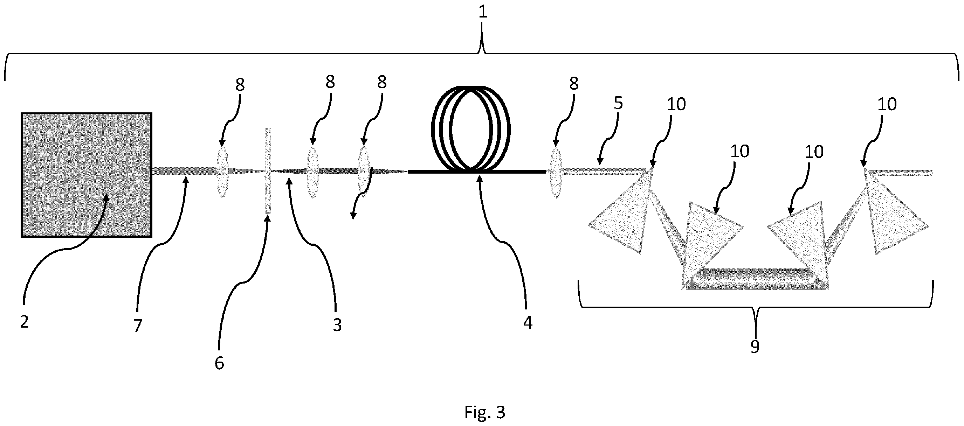

**Fig. 3** shows a second example of an ANDi SC system **1** according to the present disclosure. The ANDi system as shown here is similar to that of **Fig. 2,** but comprises, in addition, a compressor **9** configured to temporally compress the ANDi SC spectrum **5.** In this example, the compressor comprises a plurality of prisms **10,** forming a so-called prism-compressor. The prism-compressor **9** is here used to shorten the pulses of the ANDi SC **5,** since short pulses may be used/required in specific applications.

**Example 3** - A first example of ANDI SC generation according to the present disclosure using a first center-wavelength of 515 nm:

**Fig. 4** shows the dispersion (as simulated) for an ANDi fiber in the form of hollow core fiber that has been optimized for using a first center-wavelength of 515 nm to generate ANDi-SC according to the present disclosure. The wavelength of 515 nm may for example be generated via second harmonic generation in a non-linear crystal **6** from a pulsed light source device emitting light pulses having a second center-wavelength of 1030 nm. Such a device may for example be an Ytterbium femtosecond fiber laser. The ANDi SC system as here described, including second harmonic generation, may be as shown in **Fig. 2.**

As to be seen from **Fig. 4,** the ANDi-fiber is a hollow core fiber having only normal dispersion between an absolute value of 0 ps/nm/km and 1500 ps/nm/km in an ANDi-wavelength range from the first center-wavelength and at least 50 nm to each side of the first center-wavelength, whereby the hollow core fiber is configured to generate a SC spectrum based on the only normal dispersion of the hollow core fiber.

More specifically, the ANDi-wavelength range is from approximately 642 nm and down to 378 nm. This is where the dispersion is below 0, thus all normal, or only normal, in that range. Since the first center-wavelength is 515 nm, the ANDi-wavelength range spans to 137 nm the left of the first center-wavelength, and to 127 nm on the right of the first center-wavelength. This is thus at least 50 nm to each side of the first center-wavelength, but also at least 90 nm to each side of the first center-wavelength, as in a preferred embodiment.

Furthermore, in the ANDi-wavelength range, as just described, the hollow core fiber has only normal dispersion between an absolute value of 0 ps/nm/km and 150 ps/nm/km. In this example, the hollow core fiber with such as dispersion profile has been provided by filling the hollow core with a pressurized gas, in this example, Argon with a pressure of 160 bar. This pressure has significantly provided more negative dispersion, as can also be seen by comparison with **Fig. 1.**

In this example, the hollow core fiber is an anti-resonant hollow core fiber, and therefore comprises a plurality of anti-resonant resonant structures. The plurality of resonant structures is a plurality of capillary tubes, each having a capillary thickness. The thickness is 350 nm, leading to resonant wavelength bands located at 350 nm and 700 nm, where transmission/guidance is not allowed. The resonant bands have dispersion that are asymptotically increasing towards both plus and minus infinity as is also indicated in **Fig. 4** by the vertical lines at the resonant bands.

As previously described, the capillary thickness may in a preferred embodiment be between a factor of 1.3 and 1.7 smaller than the first center-wavelength, more preferably wherein the capillary thickness is between a factor of 1.4 and 1.6 smaller than the first center-wavelength, such as around a factor 1.5 smaller than the first center-wavelength. In this case, the factor is 515 nm / 350 nm = 1.47. Finally, the hollow core fiber has a core diameter of 20 microns.

Each pulse in the first train of light-pulses, together with the hollow-core fiber, is defined by a soliton number, N, which in this example is N=131.

When light pulses are pumped into the hollow core fiber as described above, the temporal pulse development through the fiber can be observed in simulations. Such a simulation is shown in **Fig. 5.** It shows how the initial pulse duration (here 330 fs) is developed to more than 4 ps in a hollow core fiber having length of 1 m. A 2D-plot of the initial pulse duration and the output pulse duration after traveling in the hollow core fiber having a length of 1 m is shown in **Fig. 6.** As previously described, if femtosecond pulses are desired or required in a specific application, a compressor, such as shown in the system of **Fig. 3** may be used.

The optical wave-breaking (OWB) distance for this fiber can be calculated to be 0.22 m. Accordingly, after 0.35 m of propagation, the pulse has broadened to around 1.5 ps, and at this distance, which is just after the optical wave-breaking distance, OWB is initiated. The initiation or onset of OWB is clearly seen in **Fig. 7,** showing small waves "falling off" the edge of the pulse, hence the name "wave breaking".

In addition to observing the pulse development through the fiber, it is also possible to observe how the spectrum develops. Such a simulation is shown in **Fig. 8.** It shows how the initial spectrum (here just the first center-wavelength of 515 nm) and how it develops to a wide spectrum that ranges from around 440 nm to around 620 nm. This example thus shows that the generated spectrum of the ANDi SC has a bandwidth that is more than 100 nm. A 2D-plot of the initial spectrum and the output spectrum after traveling in the hollow core fiber having a length of 1 m is shown in **Fig. 9.**

A bit after the optical wave-breaking distance, at 0.35 m, the initiation of OWB can also be seen in **Fig. 10,** showing a small spectrum that starts to develop around 445 nm, as indicated by the arrow. From this distance, the combined effect of SPM and OWB form the SC spectrum as shown in **Fig. 9.** Since the output spectrum in **Fig. 9** is formed both by OWB and SPM, the SC spectrum of **Fig. 9** defines an ANDi SC spectrum. As can be seen by comparison of **Fig. 9** and **Fig. 10,** the spectrum at the optical wave-braking distance has two distinct peaks (shown in **Fig. 10**), as are due to SPM broadening only, and at the output of 1 m, when the OWB has developed further (as shown in **Fig. 9**), these two peaks have been washed out by the effect of OWB, and provided a flatter and even broader spectrum, as is characteristic of an ANDi SC spectrum.

**Example 4** - A second example of ANDI SC generation according to the present disclosure using a first center-wavelength of 400 nm:

**Fig. 11** shows the dispersion (as simulated) for an ANDi fiber in the form of hollow core fiber that has been optimized for using a first center-wavelength of 400 nm to generate ANDi-SC according to the present disclosure. The wavelength of 400 nm may for example be generated via second harmonic generation in a non-linear crystal **6** from a pulsed light source device emitting light pulses having a second center-wavelength of 800 nm. Such a device may for example be an Ti:Sapphire laser. The ANDi SC system as here described, including second harmonic generation, may be as shown in **Fig. 2.**

As to be seen from **Fig. 11,** the ANDi-fiber is a hollow core fiber having only normal dispersion between an absolute value of 0 ps/nm/km and 1500 ps/nm/km in an ANDi-wavelength range from the first center-wavelength and at least 50 nm to each side of the first center-wavelength, whereby the hollow core fiber is configured to generate a SC spectrum based on the only normal dispersion of the hollow core fiber.

More specifically, the ANDi-wavelength range is from approximately 510 nm and down to 295 nm. This is where the dispersion is below 0, thus all normal, or only normal, in that range. Since the first center-wavelength is 400 nm, the ANDi-wavelength range spans to 105 nm the left of the first center-wavelength, and to 110 nm on the right of the first center-wavelength. This is thus at least 50 nm to each side of the first center-wavelength, but also at least 90 nm to each side of the first center-wavelength, as in a preferred embodiment.

Furthermore, in the ANDi-wavelength range, as just described, the hollow core fiber has only normal dispersion between an absolute value of 0 ps/nm/km and 300 ps/nm/km. In this example, the hollow core fiber with such as dispersion profile has been provided by filling the hollow core with a pressurized gas, in this example, Argon with a pressure of 100 bar. This pressure has significantly provided more negative dispersion, as can also be seen by comparison with **Fig. 1.**

In this example, the hollow core fiber is an anti-resonant hollow core fiber, and therefore comprises a plurality of anti-resonant resonant structures. The plurality of resonant structures is a plurality of capillary tubes, each having a capillary thickness. The thickness is 275 nm, leading to resonant wavelength bands located at 275 nm and 550 nm, where transmission/guidance is not allowed. The resonant bands have dispersion that are asymptotically increasing towards both plus and minus infinity as is also indicated in **Fig. 11** by the vertical lines at the resonant bands.

As previously described the capillary thickness may in a preferred embodiment be between a factor of 1.3 and 1.7 smaller than the first center-wavelength, more preferably wherein the capillary thickness is between a factor of 1.4 and 1.6 smaller than the first center-wavelength, such as around a factor 1.5 smaller than the first center-wavelength. In this case, the factor is 400 nm / 275 nm = 1.45. Finally, the hollow core fiber has a core diameter of 15 microns.

Each pulse in the first train of light-pulses, together with the hollow-core fiber, is defined by a soliton number, N, which in this example is N=167.

When light pulses are pumped into the hollow core fiber as described above, the temporal pulse development through the fiber can be observed in simulations. Such a simulation is shown in **Fig. 12.** It shows how the initial pulse duration (here 330 fs) is developed to more than 10 ps in a hollow core fiber having length of 2 m. A 2D-plot of the initial pulse duration and the output pulse duration after traveling in the hollow core fiber having a length of 2 m is shown in **Fig. 13.** As previously described, if femtosecond pulses are desired or required in a specific application, a compressor, such as shown in the system of **Fig. 3** could be used.

The optical wave-breaking (OWB) distance for this fiber can be calculated to be 0.19 m. Accordingly, after 0.35 m of propagation, the pulse has broadened to around 1.5 ps, and at this distance, which is after the optical wave-breaking distance, OWB is initiated. The initiation or onset of OWB is clearly seen in **Fig. 14,** showing small waves "falling off' the edge of the pulse, hence the name "wave breaking".

In addition to observing the pulse development through the fiber, it is also possible to observe how the spectrum develops. Such a simulation is shown in **Fig. 15.** It shows how the initial spectrum (here just the first center-wavelength of 400 nm) and how it develops to a wide spectrum that ranges from around 330 nm to around 500 nm. This example thus shows that the generated spectrum of the ANDi SC has a bandwidth that is more than 100 nm. A 2D-plot of the initial spectrum and the output spectrum after traveling in the hollow core fiber having a length of 2 m is shown in **Fig. 16.**

A bit after the optical wave-breaking distance, at 0.35 m, the initiation of OWB can also be seen in **Fig. 17,** showing a small spectrum that starts to develop around 345 nm, as indicated by the arrow. From this distance, the combined effect of SPM and OWB form the SC spectrum as shown in **Fig. 16.** Since the output spectrum in **Fig. 16** is formed both by OWB and SPM, the SC spectrum of **Fig. 16** defines an ANDi SC spectrum. As can be seen by comparison of **Fig. 16** and **Fig. 17,** the spectrum at the optical wave-braking distance has two distinct peaks (shown in **Fig. 17**), as are due to SPM broadening only, and at the output of 2 m, when the OWB has developed further (as shown in **Fig. 16**), these two peaks have been washed out by the effect of OWB, and provided a flatter and even broader spectrum, as is characteristic of an ANDi SC spectrum.

**Example 5** - A third example of ANDI SC generation according to the present disclosure using a first center-wavelength of 343 nm:

**Fig. 18** shows the dispersion (as simulated) for an ANDi fiber in the form of hollow core fiber that has been optimized for using a first center-wavelength of 343 nm to generate ANDi-SC according to the present disclosure. The wavelength of 343 nm may for example be generated via second harmonic generation and sum frequency generation in two non-linear crystals **6** and from a pulsed light source device emitting light pulses having a second center-wavelength of 1030 nm. Such a device may for example be an Ytterbium femtosecond fiber laser. The ANDi SC system as here described, including second harmonic generation, may be as shown in **Fig. 2.**

As to be seen from **Fig. 18,** the ANDi-fiber is a hollow core fiber having only normal dispersion between an absolute value of 0 ps/nm/km and 1500 ps/nm/km in an ANDi-wavelength range from the first center-wavelength and at least 50 nm to each side of the first center-wavelength, whereby the hollow core fiber is configured to generate a SC spectrum based on the only normal dispersion of the hollow core fiber.

More specifically, the ANDi-wavelength range is from approximately 420 nm and down to 260 nm. This is where the dispersion is below 0, thus all normal, or only normal, in that range. Since the first center-wavelength is 343 nm, the ANDi-wavelength range spans to 83 nm the left of the first center-wavelength, and to 77 nm on the right of the first center-wavelength. This is thus at least 50 nm to each side of the first center-wavelength.

Furthermore, in the ANDi-wavelength range, as just described, the hollow core fiber has only normal dispersion between an absolute value of 0 ps/nm/km and 100 ps/nm/km. In this example, the hollow core fiber with such as dispersion profile has been provided by filling the hollow core with a pressurized gas, in this example, Argon with a pressure of 40 bar. This pressure has significantly provided more negative dispersion, as can also be seen by comparison with **Fig. 1.**

In this example, the hollow core fiber is an anti-resonant hollow core fiber, and therefore comprises a plurality of anti-resonant resonant structures. The plurality of resonant structures is a plurality of capillary tubes, each having a capillary thickness. The thickness is 220 nm, leading to resonant wavelength bands located at 220 nm and 440 nm, where transmission/guidance is not allowed. The resonant bands have dispersion that are asymptotically increasing towards both plus and minus infinity as is also indicated in **Fig. 18** by the vertical lines at the resonant bands.

As previously described the capillary thickness may in a preferred embodiment be between a factor of 1.3 and 1.7 smaller than the first center-wavelength, more preferably wherein the capillary thickness is between a factor of 1.4 and 1.6 smaller than the first center-wavelength, such as around a factor 1.5 smaller than the first center-wavelength. In this case, the factor is 343 nm / 220 nm = 1.56. Finally, the hollow core fiber has a core diameter of 15 microns.

Each pulse in the first train of light-pulses, together with the hollow-core fiber, is defined by a soliton number, N, which in this example is N=163.

When light pulses are pumped into the hollow core fiber as described above, the temporal pulse development through the fiber can be observed in simulations. Such a simulation is shown in **Fig. 19.** It shows how the initial pulse duration (here 330 fs) is developed to more than 4 ps in a hollow core fiber having length of 2 m. A 2D-plot of the initial pulse duration and the output pulse duration after traveling in the hollow core fiber having a length of 2 m is shown in **Fig. 20.** As previously described, if femtosecond pulses are desired or required in a specific application, a compressor, such as shown in the system of **Fig. 3** could be used.

The optical wave-breaking (OWB) distance for this fiber can be calculated to be 0.42 m. Accordingly, after 0.70 m of propagation, the pulse has broadened to around 1.5 ps, and at this distance, which is after the optical wave-breaking distance, OWB is initiated. The initiation or onset of OWB is clearly seen in **Fig. 14,** showing small waves "falling off' the edge of the pulse, hence the name "wave breaking".

In addition to observing the pulse development through the fiber, it is also possible to observe how the spectrum develops. Such a simulation is shown in **Fig. 22.** It shows how the initial spectrum (here just the first center-wavelength of 343 nm) and how it develops to a wide spectrum that ranges from around 298 nm to around 402 nm. This example thus shows that the generated spectrum of the ANDi SC has a bandwidth that is more than 100 nm. A 2D-plot of the initial spectrum and the output spectrum after traveling in the hollow core fiber having a length of 2 m is shown in **Fig. 23.**

A bit after the optical wave-breaking distance, at 0.70 m, the initiation of OWB can also be seen in **Fig. 24,** showing a small spectrum that starts to develop around 305 nm, as indicated by the arrow. From this distance, the combined effect of SPM and OWB form the SC spectrum as shown in **Fig. 23.** Since the output spectrum in **Fig. 23** is formed both by OWB and SPM, the SC spectrum of **Fig. 23** defines an ANDi SC spectrum. As can be seen by comparison of **Fig. 23** and **Fig.24,** the spectrum at the optical wave-braking distance has two distinct peaks (shown in **Fig. 24**), as are due to SPM broadening only, and at the output of 2 m, when the OWB has developed further (as shown in **Fig. 23**), these two peaks have been washed out by the effect of OWB, and provided a flatter and even broader spectrum, as is characteristic of an ANDi SC spectrum.

## Claims

1. An all-normal-dispersion (ANDi) based supercontinuum (SC) system, comprising:

    - a pulsed light-source-device configured to generate a first train of light-pulses, wherein each of the light pulses is defined in a first frequency-domain, and wherein each of the light-pulses of the first train of light-pulses is defined by a first center-wavelength, wherein the first center-wavelength is below 550 nm; and
    - an ANDi-fiber optically coupled to the pulsed light-source-device and to receive the light-pulses of the first train of light-pulses, wherein the ANDi-fiber is a hollow core fiber having only normal dispersion between an absolute value of 0 ps/nm/km and 1500 ps/nm/km in an ANDi-wavelength range from the first center-wavelength and at least 50 nm to each side of the first center-wavelength, whereby the hollow core fiber is configured to generate a SC spectrum based on the only normal dispersion of the hollow core fiber, and
    wherein the hollow core fiber has a length configured to initiate both self-phase modulation (SPM) and optical wave-breaking (OWB) in the ANDi-wavelength range, and
    wherein the hollow core fiber further has a length configured to develop the SC spectrum by the combined effect of SPM and OWB, thereby defining that the SC spectrum is an ANDi SC spectrum.

2. The supercontinuum system according to claim 1, wherein the supercontinuum system further comprises a frequency-conversion-element, such that first train of light-pulses in the first frequency-domain is generated from the frequency-conversion-element and a second train of light-pulses, wherein the pulsed light-source device is configured to generate the second train of light-pulses prior to the first train of light-pulses being generated, wherein each of the light-pulses in the second train of light-pulses is defined in a second frequency-domain such that the second train of light-pulses has light-pulses defined by a second center wavelength, wherein the second center-wavelength is below 1100 nm.

3. The supercontinuum system according to any of the preceding claims, wherein each pulse in the first train of light-pulses, together with the hollow-core fiber, is defined by a soliton number, N, being between 50 and 500, preferably between 50 and 200, more preferably between 100 and 150.

4. The supercontinuum system according to any of the preceding claims, wherein the pulsed light-source-device is a femto-second pulse source configured to generate the first train of light-pulses with light-pulses that are defined to have a pulse duration of less than 1 ps, such as around or less than 500 fs, such as around or less than 250 fs.

5. The supercontinuum system according to any of the preceding claims, wherein the first center-wavelength is around 532 nm or below that, or around 525 nm or below that, or around 400 nm or below that.

6. The supercontinuum system according to claim 2, wherein the second center-wavelength is around 1064 nm or below that, or around 1050 nm or below that, such as around 1030 nm, or around 800 nm or below that.

7. The supercontinuum system according to claim 2, wherein the frequency-conversion-element is a non-linear crystal configured for frequency-doubling the second frequency-domain to the first frequency-domain by second harmonic generation.

8. The supercontinuum system according to any of the preceding claims, wherein the hollow core fiber has one or more anti-resonant resonant structures.

9. The supercontinuum system according to claim 8, wherein the one or more resonant structures is a plurality of capillary tubes, each of the capillary tubes having a capillary thickness, and wherein the capillary thickness is between a factor of 1.3 and 1.7 smaller than the first center-wavelength, more preferably wherein the capillary thickness is between a factor of 1.4 and 1.6 smaller than the first center-wavelength, such as around a factor 1.5 smaller than the first center-wavelength.

10. The supercontinuum system according to claim 8 and/or 9, wherein the one or more resonant structures is a plurality of capillary tubes, each of the capillary tubes having a capillary thickness, and wherein the capillary thickness for at least two of the plurality of capillary tubes is different, whereby the hollow core fiber becomes birefringent to efficiently suppress polarization-dependent noise amplification processes.

11. The supercontinuum system according to any of the preceding claims, wherein the hollow core fiber has only normal dispersion between an absolute value of 0 ps/nm/km and 500 ps/nm/km in the wavelength range, or wherein the hollow core fiber has only normal dispersion between an absolute value of 0 ps/nm/km and 300 ps/nm/km in the wavelength range.

12. The supercontinuum system according to any of the preceding claims, wherein the hollow core fiber has only normal dispersion between an absolute value of 0 ps/nm/km and 150 ps/nm/km in the ANDi-wavelength range.

13. The supercontinuum system according to any of the preceding claims, wherein the ANDi-wavelength range is from the first center-wavelength and at least 90 nm to each side of the first center-wavelength.

14. The supercontinuum system according to any of the claims 1 and/or claims 11-13, wherein the only normal dispersion in the ANDi-wavelength range is provided by the hollow core fiber being filled with a gas that is pressurized to a pressure of more than 20 bars, such as more than 50 bars, preferably around or more than 100 bars, such as around or more than 150 bars.

15. The supercontinuum system according to any of the preceding claims, wherein the hollow core fiber has a core diameter of less than 50 microns, preferably less than 30 microns, such as less than 20 microns.

16. The supercontinuum system according to any of the preceding claims, wherein the length of hollow core fiber is more than 0.25 m, such as around or more than 0.5 m, such as around or more than 1 m, such as around 2 m.

17. The supercontinuum system according to any of the preceding claims, wherein the generated spectrum of the ANDi SC has a bandwidth that is more than 100 nm.

50 um core size, 300 nm cap thickness

Fig. 1

Fig. 2

Fig. 3

350 nm capillary wall thickness, LP01, gas = ar, 20 um core size

pressure=160 bar

Dispersion [ps/nm km]

wavelength [nm]

50

25

0

-25

-50

-75

-100

-125

400    500    600    700    800

Fig. 4

Fig. 5

EP 4 586 005 A1

Fig. 6

Fig. 7

Fig. 8

Fig. 9

25

Fig. 10

EP 4 586 005 A1

Fig. 11

Fig. 12

Fig. 13

EP 4 586 005 A1

Fig. 14

Fig. 15

Fig. 16

Fig. 17

220 nm capillary wall thickness, LP01, gas = ar, 15 um core size

Fig. 18

EP 4 586 005 A1

Fig. 19

EP 4 586 005 A1

Fig. 20

Fig. 21

Fig. 22

EP 4 586 005 A1

Fig. 23

Fig. 24

Europäisches
Patentamt

European
Patent Office

Office européen
des brevets

**EUROPEAN SEARCH REPORT**

**Application Number**

EP 24 15 1008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARTUNG ALEXANDER ET AL: "Dispersion design of all-normal dispersive microstructured optical fibers for coherent supercontinuum generation", OPTICAL SENSORS 2011; AND PHOTONIC CRYSTAL FIBERS V, SPIE, 1000 20TH ST. BELLINGHAM WA 98225-6705 USA, vol. 8073, no. 1, 5 May 2011 (2011-05-05), pages 1-7, XP060012577, DOI: 10.1117/12.886684 [retrieved on 1901-01-01] * the whole document * | 1,4,12 | INV. G02F1/35 G02F1/365 |
| X | ALEXANDER M. HEIDT A,B, ALEXANDER HARTUNGB, ERICH G. ROHWERA, AND HARTMUT BARTELTB: "Infrared, visible and ultraviolet broadband coherent supercontinuumgeneration in all-normal dispersion fibers", SPIE, PO BOX 10 BELLINGHAM WA 98227-0010, USA, 14 October 2010 (2010-10-14), XP040542868, * the whole document * | 1,5,12 | |
| A,D | SYLVESTRE T ET AL: "Recent advances in supercontinuum generation in specialty optical fibers [Invited]", ARXIV.ORG, CORNELL UNIVERSITY LIBRARY, 201 OLIN LIBRARY CORNELL UNIVERSITY ITHACA, NY 14853, 5 November 2021 (2021-11-05), XP091094003, DOI: 10.1364/JOSAB.439330 * the whole document * | 1-17 | |

TECHNICAL FIELDS SEARCHED (IPC)

G02F

-/--

The present search report has been drawn up for all claims

| Place of search | Date of completion of the search | Examiner |
|---|---|---|
| The Hague | 13 June 2024 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 15 1008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MEDJOURI ABDELKADER ET AL: "Numerical investigation of coherent supercontinuum generation via soliton implosion in ZBLAN photonic crystal fiber", OPTICAL ENGINEERING, SOCIETY OF PHOTO-OPTICAL INSTRUMENTATION ENGINEERS, 1000 20TH ST. BELLINGHAM WA 98225-6705 USA, vol. 61, no. 9, 1 September 2022 (2022-09-01), page 96106, XP060164867, ISSN: 0091-3286, DOI: 10.1117/1.OE.61.9.096106 [retrieved on 2022-09-15] * the whole document * | 1-17 | |
| A | MD SELIM HABIB ET AL: "Multi-stage generation of extreme ultraviolet dispersive waves by tapering gas-filled hollow-core anti-resonant fibers", ARXIV.ORG, CORNELL UNIVERSITY LIBRARY, 201 OLIN LIBRARY CORNELL UNIVERSITY ITHACA, NY 14853, 20 December 2017 (2017-12-20), XP081150876, DOI: 10.1364/OE.26.024357 * the whole document * | 1-17 | **TECHNICAL FIELDS SEARCHED (IPC)** |

-/--

The present search report has been drawn up for all claims

| Place of search | Date of completion of the search | Examiner |
|---|---|---|
| The Hague | 13 June 2024 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 15 1008

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUKHOIVANOV IGOR A ET AL: "Supercontinuum generation at 800 nm in all-normal dispersion photonic crystal fiber", OPTICS EXPRESS, vol. 22, no. 24, 1 December 2014 (2014-12-01), page 30234, XP093173613, US ISSN: 1094-4087, DOI: 10.1364/OE.22.030234 Retrieved from the Internet: URL:https://opg.optica.org/directpdfaccess /cd2b611a-2dd7-461b-bb9f4ac3132956e6_30535 0/oe-22-24-30234.pdf?da=1&id=305350&seq=0& mobile=no> * the whole document * ----- | 1-17 | |

TECHNICAL FIELDS
SEARCHED        (IPC)

The present search report has been drawn up for all claims

| Place of search | Date of completion of the search | Examiner |
|---|---|---|
| The Hague | 13 June 2024 | Beugin, Anne |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5867305 A

**Non-patent literature cited in the description**

- All-Fiber-Based All-Normal Dispersion Supercontinuum Source Using a Femtosecond Fiber Laser with Hollow-Core Fiber Pulse Compression. **I. B. GON-ZALO**. Advanced Photonics 2018. Optica Publishing Group, 2018
- All-Normal Dispersion Fiber Supercontinuum: Principles, Design, and Applications of a Unique White Light Source. **HEIDT, A.M.** ; **SPANGENBERG, DM.** ; **RAMPUR, A.** ; **HARTUNG, A.** ; **BARTELT, H.** The Supercontinuum Laser Source. Springer, Cham., 2022

- All-normal dispersion supercontinuum generation in photonic crystal fibers with large hollow cores infiltrated with toluene. *Opt. Mater. Express*, 2018, vol. 8, 3568-3582
- **D. ANDERSON et al.** Wave breaking in nonlinear-optical fibers. *Optical Society of America*, 1992